# EUROPEAN PATENT SPECIFICATION

(11) **EP 4 290 734 B1**
(45) Date of publication and mention of the grant of the patent: **28.10.2026**
(21) Application number: 23177179.1
(22) Date of filing: 05.06.2023
(51) Int. Cl.: H02J 7/00, F02P 11/00

(54) **SAFETY CONTROL CIRCUIT AND AUTOMOBILE EMERGENCY STARTING CLAMP PROVIDED WITH SAME**
SICHERHEITSSTEUERSCHALTUNG UND NOTSTARTKLEMME FÜR EIN KRAFTFAHRZEUG DAMIT
CIRCUIT DE COMMANDE DE SÉCURITÉ ET PINCE DE DÉMARRAGE D'URGENCE D'AUTOMOBILE POURVUE DE CELUI-CI

(30) Priority: 06.06.2022 CN 202210630622
(43) Date of publication of application: 13.12.2023
(73) Proprietor: Dongguan Hang Che Bao Future Technology Co., Ltd., Dongguan City Guangdong (CN)
(72) Inventor: Zeng, Guozhi, Lianyuan City (CN); Zeng, Guofa, Lianyuan City (CN); Liao, Xiuxia, Xingning City (CN)
(74) Representative: Cleanthous, Marinos

(56) References cited:
- CN-A- 114 156 996

## Description

### TECHNICAL FIELD

The present disclosure relates to the related technical field of automobile emergency starting power connection clamps, in particular to a safety control circuit and an automobile emergency starting clamp provided with the same.

### BACKGROUND

In today's prosperous economic environment, whether it is used for family travel or long-distance passenger and cargo transportation, automobiles have entered people's life and become an indispensable part in daily life and work. Due to various reasons, such as long-distance passenger and cargo transportation, a self-driving tour and being on other busy roads, long-time or incorrect driving habits and self-consumption of power of an automobile caused by long-time parking easily lead to excessive feed of an automobile battery. As a result, the automobile fails in starting, which will severely affect life and work. If no auxiliary starting equipment is found in time, a user needs to pay a towing fee or more parking fees.

An existing automobile emergency starting clamp has the advantages of simple structure, slow response and low safety.

CN114156996 (A) provides an ignition clamp which comprises a first input end electrically connected with a positive electrode of a starting power supply, a second input end electrically connected with a negative electrode of the starting power supply, a first clamp for clamping a positive electrode of an automobile storage battery, and a second clamp for clamping a negative electrode of the automobile storage battery, the second input end is electrically connected with the second clip; the first input end is electrically connected with the first clip through the switch device; the non-MCU type control circuit is electrically connected with the control end of the switching device and is used for controlling the switching device to be switched on when the first clamp and the second clamp are positively connected to the electrode of the automobile storage battery, so that an access is formed between the starting power supply and the automobile storage battery; when the first clamp and the second clamp are reversely connected to the electrode of the automobile storage battery, the switch device is not controlled to be switched on, so that an access cannot be formed between the starting power supply and the automobile storage battery. The ignition clamp can play a necessary protection role when the ignition clamp is reversely connected to the electrode of the automobile storage battery.

Therefore, it is necessary to provide a safety control circuit and an automobile emergency starting clamp with the same to solve the problems in the prior art.

### SUMMARY

The present disclosure mainly aims to overcome the shortcomings in the prior art, and provides a safety control circuit as defined in claim 1 and an automobile emergency starting clamp provided with same, as defined in claim 5, to solve the problems in the prior art. Preferred embodiments are defined in the dependent claims.

In order to achieve the above-mentioned objective, the technical solutions provided according to the present invention are as follows: The safety control circuit includes an EC5 input module, an ignition clip module, a relay module, a timing control module, an input high-voltage protection module, a voltage-stabilizing power supply module, an input low-voltage protection module, a high-temperature protection module, a low-temperature protection module, an error alarm module, a first timing module, a second timing module and a light display module;
the EC5 input module includes an EC5+ terminal and an EC5- terminal;
the ignition clip module includes a red clip wire OUT+ network terminal, a black clip OUT- terminal, a diode D12 and a diode D19; the red clip wire OUT+ network terminal is connected to a first wire; the first wire is connected to OUT+ and is connected to one end of the diode D19 and an output end of the relay module at the same time; an input end of the relay module is connected to a second wire; the other end of the second wire is connected to the EC5+ terminal; the other end of the diode D19 is connected to a Negative Temperature Coefficient (NTC) resistor; the black clip OUT-terminal is connected to a third wire; the third wire is connected to an OUT- network and is connected to one end of the diode D12 at the same time; the other end of the diode D12 is grounded; the other end of the third wire is connected to the EC5-terminal;
the EC5+ terminal is also connected to a VCC+ network, the voltage-stabilizing power supply module and the input high-voltage protection module;
the relay module includes a relay RK3, a diode D6, a diode D7, a triode Q1, a resistor R7, a resistor R44, a triode Q2, and a resistor R4; while pin 3 of the relay RK3 is connected to the VCC+ network, after pin 3 is connected to the diode D6, the diode D7 and pin 2 of the triode Q1 in series, pin 1 of the triode Q1 is connected to pin 2 of the resistor R44; pin 3 of the triode Q1 is grounded; pin 1 of the resistor R7 is connected to pin 3 of the triode Q1; after pin 2 of the resistor R7 is connected to pin 2 of the triode Q2, pin 1 of the triode Q2 is connected to pin 2 of the resistor R4; pin 1 of the resistor R4 and pin 3 of the triode Q2 are grounded; pin 2 of the relay RK3 is set as an output end of the relay module; pin 1 of the relay RK3 is set as an input end of the relay module;
the voltage-stabilizing power supply module includes a diode D1, a capacitor C1, a capacitor C2, a three-terminal voltage-stabilizing chip U3, a capacitor C3, a capacitor C6, and a filter capacitor CE3; one end of the diode D1 is connected to the EC5+ terminal, and the other end is connected to a VIN terminal of the three-end voltage-stabilizing chip U3; the capacitor C1 and the capacitor C2 are connected in parallel to the VIN terminal and a GND terminal of the three-terminal voltage-stabilizing chip U3; the capacitor C3, the capacitor C6 and the filter capacitor CE3 are all connected in parallel to the GND terminal and an OUT terminal of the three-terminal voltage-stabilizing chip U3; the GND terminal of the three-terminal voltage-stabilizing chip U3 is grounded; one end of the capacitor C1 is connected to pin 3 of the three-terminal voltage-stabilizing chip U3, and the other end is connected to pin 2 of the three-terminal voltage-stabilizing chip U3; pin 3 of the three-terminal voltage-stabilizing chip U3 is also connected to a VCC1 power supply voltage;
the input high-voltage protection module includes a zener diode ZD1, a zener diode ZD2, a diode D9, a diode D13, a resistor R13 and a resistor R21; the zener diode ZD2 is connected in series with the diode D9, the diode D13, the resistor R21, the diode D13 and the zener diode ZD1 in sequence, and the other end of the zener diode ZD1 is connected to the OUT+ network;
the input low-voltage protection module includes a diode D5, a diode D4, a resistor R16, an output signal LV, an operational amplifier LM-358, a capacitor C4, a resistor R15, a capacitor C8, a capacitor C19, a capacitor C22, a capacitor C13, a capacitor C21, a resistor R24, a diode D11, the VCC1 power supply voltage, a diode D17, a resistor R26, a triode Q5, a resistor R33, a resistor R19, a capacitor C11, a resistor R8, a resistor R19 and a capacitor C5; the operational amplifier LM-358 includes a VDD terminal of pin 8, a + terminal of pin 5, a - terminal of pin 6, a U1-B terminal of pin 7 and a GND terminal of pin 4; the diode D5, the diode D4 and resistor R16 are connected in series in sequence; pin 7 of the operational amplifier LM-358 is connected to a control signal LV; the U1-B terminal of pin 7 and the + terminal of pin 5 of the operational amplifier LM-358 are respectively connected in parallel to two ends of the diode D4 and the resistor R16; the GND terminal of pin 4 of the operational amplifier LM-358 is grounded; the VDD terminal of pin 8 of the operational amplifier LM-358 is connected to the OUT terminal of pin 1 of the three-terminal voltage-stabilizing chip U3 in the voltage-stabilizing power supply module; the - terminal of pin 6 of the operational amplifier LM-358 is connected in series with the resistor R24, the diode D11 and the VCCC1 power supply voltage in sequence; the resistor R15, the capacitor C8, the capacitor C19, the capacitor C22, the capacitor C13 and the capacitor C21 are all connected in parallel to the VVD terminal of pin 8 and the - terminal of pin 6 of the operational amplifier LM-358; the capacitor C4 and the resistor R15 are connected in series; the resistor R26 is connected in series with the diode D17, pin 2 of the triode Q5 and pin 3 of the triode Q5 in sequence and is then connected in parallel to pin 6 of the operational amplifier LM-358 and the VDD terminal of pin 8 of the operational amplifier LM-358; pin 1 of the triode Q5 is grounded after being connected in series to the resistor R19 and the capacitor C11; two ends 2 and 1 of the resistor R33 are respectively connected in parallel to pin 3 of the triode Q5 and end 1 of the resistor R19; after being connected in series, the capacitor C5 and the resistor R8 are respectively connected to end 2 of the resistor R16 and the OUT terminal of pin 1 in the three-terminal voltage-stabilizing chip U3 in the voltage-stabilizing power supply module; two ends of the resistor R9 are respectively connected to the capacitor C5 and end 1 of the resistor R8; end 1 of the resistor R9 is grounded after being connected to the capacitor C5;
the high-temperature protection module includes a network OT, a diode D3, a diode D8, a temperature comparator U1-A, a resistor R18, an NTC resistor, a capacitor C10, a resistor R3, a capacitor C9, a resistor R10, a resistor R14 and a VDD power supply voltage; the diode D3 is connected to pin 1 of the temperature comparator U1-A; pin 2 of the temperature comparator U1-A is connected to the OUT terminal of pin 1 in the three-terminal voltage-stabilizing chip U3 in the voltage-stabilizing power supply module after being connected to the resistor R3; the network OT is connected in series to the diode D8 and the resistor R18 in sequence; the network OT and pin 2 of the resistor R18 are respectively connected to the diode D3 and pin 3 of the temperature comparator U1-A; pin 2 of the NTC resistor is grounded; pin 1 of the NTC resistor is connected to pin 1 of the resistor R3; the capacitor C10 is connected in parallel to two ends of pin 2 and pin 1 of the NTC resistor; pin 3 of the temperature comparator U1-A is connected in series to the resistor R14 and the VDD power supply voltage; pin 2 of the resistor R10 is grounded; pin 1 of the resistor R10 is connected to pin 1 of the resistor R14; the capacitor C9 is connected in parallel to two ends of pin 1 and pin 2 of the resistor R10;
the timing control module includes a resistor R28, a resistor R34, a triode Q7, a triode Q3, a resistor R35 and a resistor R36; pin 2 of the triode Q3 is connected to pin 1 of the resistor R44 and pin 2 of the triode Q7; pin 1 of the triode Q3 is connected to pin 2 of the resistor R36 and pin 1 of the resistor R35; pin 1 of the resistor R36 is connected to a VDD network; pin 2 of the resistor R35 is grounded; pin 1 of the triode Q7 is connected to pin 1 of the resistor 28 and pin 2 of the resistor R34; pin 1 of the resistor R34 is connected to pin 3 of the triode Q7;
the first timing module includes a PM network, a resistor R31, a diode D18, a chip U2, a V1 network, a capacitor C14, a capacitor C16, a capacitor C17, a diode D14, a diode D15, a resistor R30, a resistor R32, a resistor R29, a capacitor C24, a triode Q4, a resistor R2, resistor R38, a Metal Oxide Semiconductor (mos) transistor Q8pin 1 of the resistor R31 is connected to pin 1 of the resistor R44 and the PM network; pin 2 of the resistor R31 is connected to pin 3 of the chip U2; the diode D18 is connected in parallel to the resistor R31; pin 5 of the chip U2 is grounded after being connected to the capacitor C14; pin 2 of the chip U2 is simultaneously connected to pin 6 of the chip U2, one end of the capacitor C17, one end of the diode D14 and one end of the diode D15; the other end of the capacitor C17 is grounded; the other end of the diode D15 is connected to pin 2 of the resistor R30; pin 1 of the resistor R30 is connected to pin 2 of the resistor R32; pin 1 of the resistor R32 is simultaneously connected to one end of the capacitor C16, pin 4 of the chip U2, pin 8 of the chip U2 and pin 3 of the mos transistor Q8; the other end of the capacitor C16 is grounded; pin 7 of the chip U2 is simultaneously connected to the other end of the diode D14, pin 1 of the resistor R30 and pin 2 of the resistor R32; pin 1 of the mos transistor Q8 is simultaneously connected to pin 2 of the triode Q4 and pin 2 of the resistor R38pin 1 of the resistor R38 is connected to pin 2 of the mos transistor Q8 and the VDD network; pin 3 of the triode Q4 is grounded; pin 1 of the resistor R29 is connected to the pin 1 of the triode Q4 and pin 2 of the resistor R29 is grounded; pin 2 of the resistor R2 is connected to one end of the diode D16;
the low-temperature protection module includes a resistor R11, a zener diode ZD3, a resistor R20, a photoelectric coupler PC3, an NTC network, a triode U4, a capacitor C7 and a resistor R45; pin 2 of the zener diode ZD3 is connected to the other end of the diode D16; pin 1 of the zener diode ZD3 is simultaneously connected to the OUT+ network and pin 1 of the resistor R20; pin 2 of the resistor R20 is connected to pin 2 of the photoelectric coupler PC3; pin 3 of the photoelectric coupler PC3 is grounded; pin 4 of the photoelectric coupler PC3 is connected to the NTC; pin 1 of the photoelectric coupler PC3 is connected to the OUT- network; pin 2 of the resistor R11 is connected to pin 1 of the resistor R4; pin 1 of the resistor R11 is grounded;
the second timing module includes a capacitor C15, a resistor R22, a resistor R23, a triode Q32, a resistor R41, a V1 network, a diode D10, a filter capacitor CE1, a resistor R37, and a triode Q6; pin 3 of the triode Q32 is simultaneously connected to pin 1 of the resistor R41 and pin 2 of the resistor R22; pin 2 of the resistor R41 is connected to the V1 network; pin 1 of the resistor R22 is simultaneously connected to pin 1 of R23 and one end of the capacitor C15; the other end of the capacitor C15 is grounded; pin 2 of the triode Q32 is connected to one end of the diode D10; the other end of the diode D10 is simultaneously connected to pin 1 of the filter capacitor CE1 and pin 1 of the resistor R37; pin 2 of the filter capacitor CE1 is grounded; pin 2 of the resistor R37 is connected to pin 1 of the triode Q6; pin 3 of the triode Q6 is grounded; pin 2 of the triode Q6 is connected to pin 1 of the triode Q3;
the error alarm module includes a resistor R17, a triode Q10, a diode D2, a resistor R5 and a buzzer; pin 1 of the resistor R17 is connected to pin 1 of the resistor R4; pin 2 of the resistor R17 is connected to pin 1 of the triode Q10; pin 3 of the triode Q10 is grounded; pin 2 of the triode Q10 is connected to pin 2 of the buzzer; two ends of the diode D2 are respectively connected to pin 1 and pin 2 of the buzzer; pin 2 of the resistor R5 is connected to pin 1 of the buzzer; pin 1 of the resistor R5 is connected to the VDD network;
the light display module includes a resistor R42, a triode Q13, a capacitor C25, a triode Q14, a resistor R43, a resistor R6, a triode Q11, a resistor R12, a red light LED3, a capacitor C18, a resistor R27, a triode Q12, a resistor R1, a capacitor C23 and a green light LED1; pin 1 of the resistor R42 is connected to pin 1 of the resistor R4; pin 2 of the resistor R42 is connected to pin 1 of the triode Q13; pin 3 of the triode Q13 is grounded; pin 2 of the triode Q13 is simultaneously connected to pin 1 of the triode Q12, pin 2 of the resistor R27 and one end of the capacitor C18; pin 3 of the triode Q12 is connected to pin 3 of the triode Q11 and grounded; pin 2 of the triode Q12 is simultaneously connected to pin 2 of the resistor R1 and one end of the capacitor C23; the other end of C23 is simultaneously connected to pin 2 of the triode Q14, pin 1 of the triode Q11 and pin 2 of the resistor R6; pin 2 of the triode Q11 is simultaneously connected to the other end of the capacitor C18 and pin 1 of the resistor R12; pin 2 of the resistor R12 is connected to one end of the red light LED3; pin 1 of the resistor R1 is connected to one end of the green light LED1; pin 1 of the resistor R6 is connected to VDD after being connected to the other end of the red light LED3, pin 1 of the resistor R27 and the other end of the green light LED1; pin 3 of the triode Q14 is grounded and is connected to one end of the capacitor C25 at the same time; the other end of the capacitor C25 is simultaneously connected to pin 1 of the triode Q14 and pin 2 of the resistor R43; and pin 1 of the resistor R43 is connected to the PM network.

As a further solution of the present disclosure, the safety control circuit further includes an access load detection module (44), wherein a detection end of the access load detection module (44) is used for acquiring a voltage signal of a load terminal; a signal output end of the access load detection module (44) is coupled to a signal input end of the first timing module (41).

As a further solution of the present disclosure, the access load detection module (44) includes a comparator U1-D, a diode D22, a diode D25, a resistor R51, a resistor R52, a resistor R53, a resistor R54, a resistor R55, a capacitor C20, a capacitor C12, and a voltage regulator ZD2; pin 13 of the comparator U1-D is connected to an anode of the diode D25, pin 2 of the resistor R52, pin 2 of the resistor R55, and one end of the capacitor C20;
a cathode of the diode D25 is connected to the load terminal; pin 1 of the resistor R52 is connected to the VDD network, and the other end of the capacitor C20 and pin 1 of the resistor R55 are grounded;
pin 12 of the comparator U1-D is connected to pin 1 of the resistor R51, pin 2 of the resistor R53, pin 1 of the resistor R54, pin 1 of the voltage regulator ZD2, and one end of the capacitor C12;
pin 2 of the resistor R51 is connected to a cathode of the diode D22, and an anode of the diode D22 is connected to the load terminal;
pin 2 of the resistor R54 is connected to a 2.5V power supply terminal;
pin 1 of the resistor R53, the other end of the capacitor C12, and pin 2 of the voltage regulator ZD2 are grounded; and
pin 14 of the comparator U1-D is connected to an anode of the diode D24, and a cathode of the diode D24 is connected to pin 2 of the resistor R2.

As a further solution of the present disclosure, the safety control circuit further includes a short circuit detection module (45), wherein a detection end of the short circuit detection module (45) is used for acquiring a current signal during load operation; and a signal output end of the short circuit detection module (45) is coupled to a signal input end of the first timing module (41).

As a further solution of the present disclosure, the short circuit detection module 45 includes a comparator U1-C, a diode D27, a diode D28, a diode D29, a resistor R46, a resistor R47, a resistor R48, a resistor R449, a resistor R56, a resistor R57, a resistor R58, a resistor R59, a transistor Q16, a capacitor C26, a capacitor C27, a capacitor C28, a chip U4 and a diode D26;
pin 10 of the comparator U1-C is connected to an anode of the diode D227, pin 2 of the resistor R47, pin 2 of the resistor R48, and one end of the capacitor C28; a cathode of the diode D27 and a cathode of the diode D28 are connected to the load terminal;
pin 1 of the resistor R47 and pin 2 of the resistor R49 are connected to the VDD network; pin 1 of the resistor R48 and the other end of the capacitor C28 are grounded;
pin 9 of the comparator U1-C is connected to pin 1 of the resistor R57, pin 1 of the resistor R58, and one end of the capacitor C27; pin 2 of the resistor R57 and an anode of the diode D28 are grounded; pin 2 of the resistor R558 is connected to the 2.5V power supply terminal;
pin 8 of the comparator U1-C is connected to pin 1 of the resistor R49, pin 2 of the resistor R59, and a cathode of the diode D29; an anode of the diode D29 is connected to a signal terminal BTV;
pin 1 of the resistor R46 and pin 1 of the resistor R59 are connected to pin 1 of the transistor Q16; pin 3 of the transistor Q16 and pin 2 of the resistor R46 are connected to the VDD network; pin 2 of the transistor Q16 is connected to pin 6 of the chip U4 and pin 1 of the resistor R56; pin 2 of the resistor R56 is connected to pin 2 of the button switch K1; pin 1 of the button switch K1 is grounded;
pin 5 of the chip U4 and one end of the capacitor C26 are connected to the VDD network; pin 2 of the chip U4 and the other end of the capacitor C26 are grounded; and
pin 1 of the chip U4 is connected to pin 2 of the resistor R2 through the diode D26.

The present disclosure further provides an automobile emergency starting clamp which is cooperatively used with an automobile emergency power supply. The automobile emergency starting clamp includes an anode cable clamp provided with a red clip wire OUT+ terminal; a cathode cable clamp provided with a black clip OUT-terminal; and a control box. The control box includes a control box upper shell, a control box lower shell, an on/off button and the above-mentioned safety control circuit.

As a further solution of the present disclosure, the control box upper shell and the control box lower shell are located above and below and are fixedly connected to each other; the safety control circuit is arranged between the control box upper shell and the control box lower shell; and the on/off button is arranged on one side of the control box upper shell and is in contact connection with the button switch K1 of the safety control circuit.

Compared with the prior art, the present disclosure has the following beneficial effects.

This safety control circuit is integrated with an EC5 input module, an ignition clip module, a relay module, a timing control module, an input high-voltage protection module, a voltage-stabilizing power supply module, an input low-voltage protection module, a high-temperature protection module, a low-temperature protection module, an error alarm module, a first timing module, a second timing module and a light display module, and features with fast response and high safety. The automobile emergency starting clamp provided with the circuit includes an anode cable clamp provided with a red clip wire OUT+ terminal; a cathode cable clamp provided with a black clip OUT-terminal; and a control box; and the control box includes a control box upper shell, a control box lower shell, an on/off button and the above-mentioned safety control circuit. The automobile emergency starting clamp can automatically detect a voltage of an automobile battery and automatically detect whether the cable clamp falls off; when the automobile battery is excessively fed, making the automobile fails in starting, the present disclosure ensures safe connection between the automobile battery and an automobile emergency starting power supply, thus achieving beneficial effects of small size, portability, rich function and high applicability.

### BRIEF DESCRIPTION OF THE DRAWINGS

FIG. 1 is a schematic diagram of a design of a safety control circuit of a safety control circuit and an automobile emergency starting clamp provided with the circuit according to the present disclosure;
FIG. 2 is a schematic diagram of circuit connection of an EC5 input module of a safety control circuit and an automobile emergency starting clamp provided with the circuit according to the present disclosure;
FIG. 3 is a schematic diagram of circuit connection of an ignition clip module of a safety control circuit and an automobile emergency starting clamp provided with the circuit according to the present disclosure;
FIG. 4 is a schematic diagram of circuit connection of a relay module of a safety control circuit and an automobile emergency starting clamp provided with the circuit according to the present disclosure;
FIG. 5 is a schematic diagram of circuit connection of a control module of a safety control circuit and an automobile emergency starting clamp provided with the circuit according to the present disclosure;
FIG. 6 is a schematic diagram of circuit connection of a high-voltage protection module of a safety control circuit and an automobile emergency starting clamp provided with the circuit according to the present disclosure;
FIG. 7 is a schematic diagram of circuit connection of a voltage-stabilizing power supply module of a safety control circuit and an automobile emergency starting clamp provided with the circuit according to the present disclosure;
FIG. 8 is a schematic diagram of circuit connection of a low--voltage protection module of a safety control circuit and an automobile emergency starting clamp provided with the circuit according to the present disclosure;
FIG. 9 is a schematic diagram of circuit connection of a high-temperature protection module of a safety control circuit and an automobile emergency starting clamp provided with the circuit according to the present disclosure;
FIG. 10 is a schematic diagram of circuit connection of a low-temperature protection module of a safety control circuit and an automobile emergency starting clamp provided with the circuit according to the present disclosure;
FIG. 11 is a schematic diagram of circuit connection of an error alarm module of a safety control circuit and an automobile emergency starting clamp provided with the circuit according to the present disclosure;
FIG. 12 is a schematic diagram of circuit connection of a first timing module of a safety control circuit and an automobile emergency starting clamp provided with the circuit according to the present disclosure;
FIG. 13 is a schematic diagram of circuit connection of a forced power-on module of a safety control circuit and an automobile emergency starting clamp provided with the circuit according to the present disclosure;
FIG. 14 is a schematic diagram of circuit connection of a second timing module of a safety control circuit and an automobile emergency starting clamp provided with the circuit according to the present disclosure;
FIG. 15 is a schematic diagram of circuit connection of a light display module of a safety control circuit and an automobile emergency starting clamp provided with the circuit according to the present disclosure;
FIG. 16 is a schematic diagram of circuit connection of an access load detection module and a short circuit detection module of a safety control circuit and an automobile emergency starting clamp provided with the circuit according to the present disclosure;
FIG. 17 is a schematic diagram of a three-dimensional structure of an automobile emergency starting clamp of a safety control circuit and an automobile emergency starting clamp provided with the circuit according to the present disclosure;
FIG. 18 is an exploded diagram of an automobile emergency starting clamp of a safety control circuit and an automobile emergency starting clamp provided with the circuit according to the present disclosure.
Descriptions of elements in the drawings: 1: anode cable clamp; 2: cathode cable clamp; 30: control box; 301: control box upper shell; 302: control box lower shell; 303: on/off button; 31: EC5 input module; 32: ignition clip module; 321: first wire; 322: second wire; 323: third wire; 33: relay module; 34: timing control module; 35: input high-voltage protection module; 36: voltage-stabilizing power supply module; 37: input low-voltage protection module; 38: high-temperature protection module; 39: low-temperature protection module; 391: error alarm module; 41: first timing module; 411: forced power-on module; 42: second timing module; 43: light display module.

### DETAILED DESCRIPTION OF THE EMBODIMENTS

The technical solutions in the embodiments of the present disclosure will be described clearly and completely below in combination with the accompanying drawings of the embodiments of the present disclosure. Apparently, the described embodiments are only part of the embodiments of the present disclosure, not all embodiments. All other embodiments obtained by those of ordinary skill in the art based on the embodiments in the present disclosure without creative work shall fall within the protection scope of the present disclosure, being defined in the the appended claims.

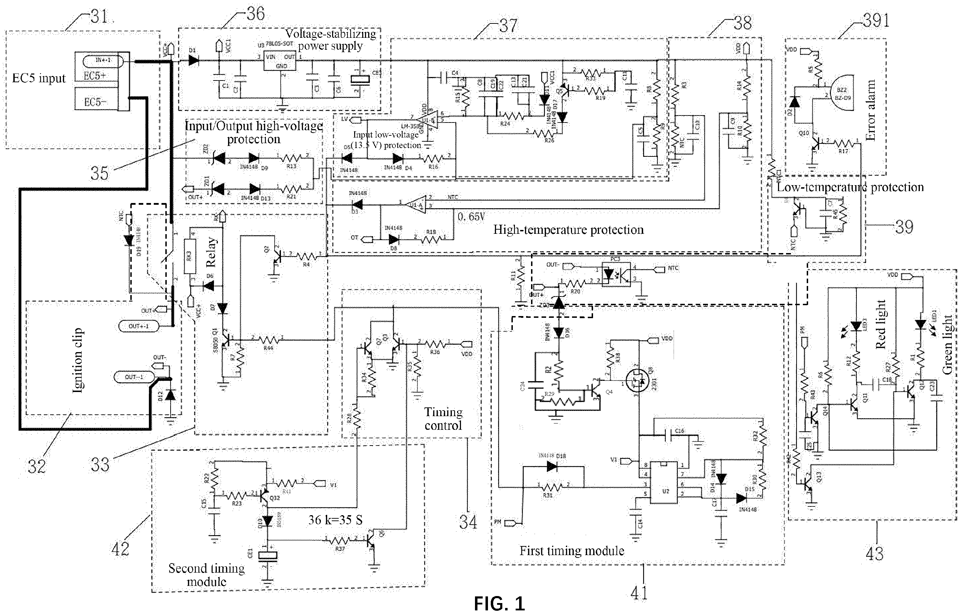

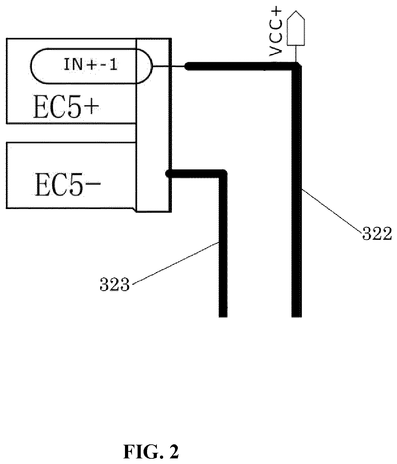

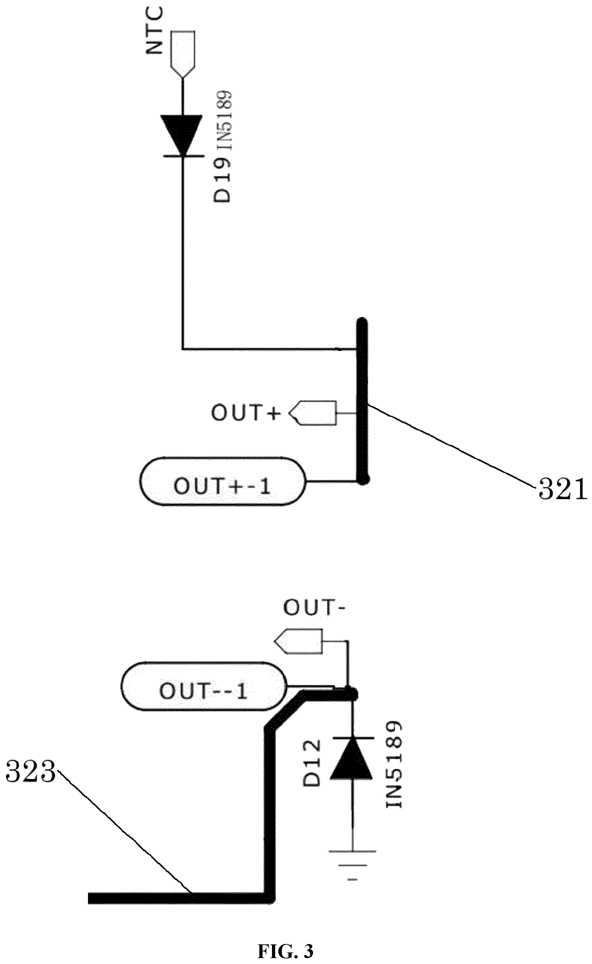

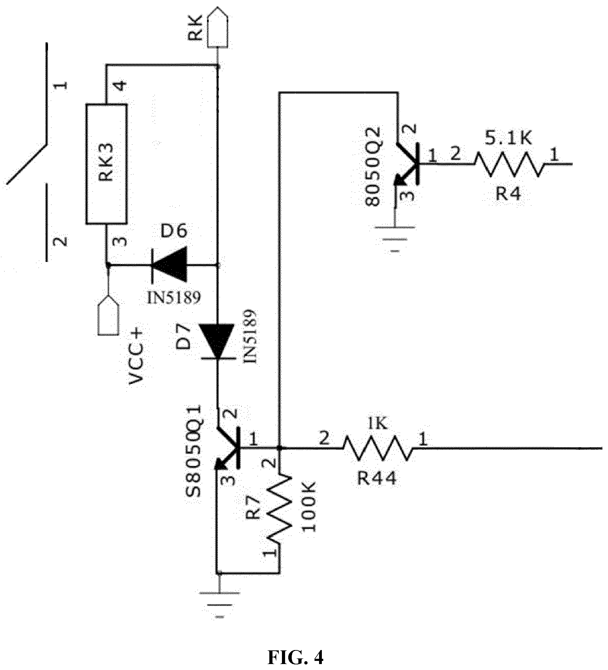

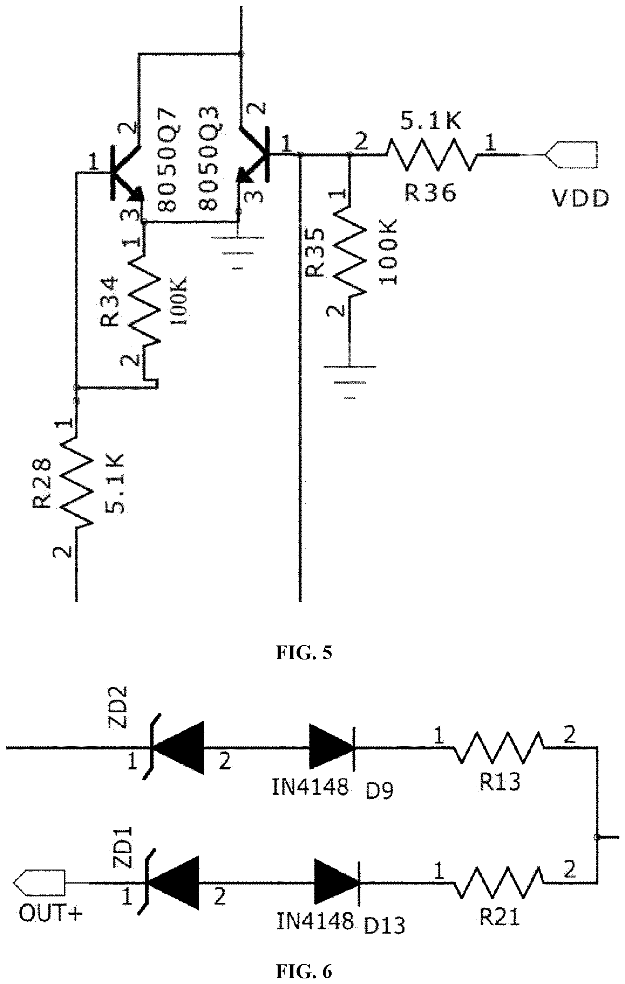

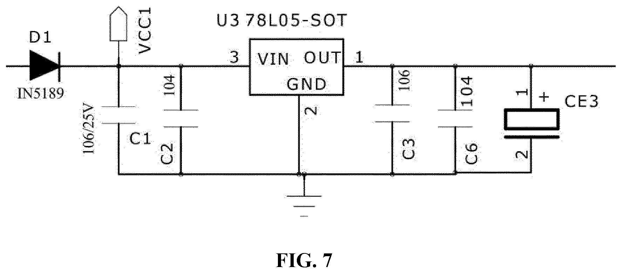

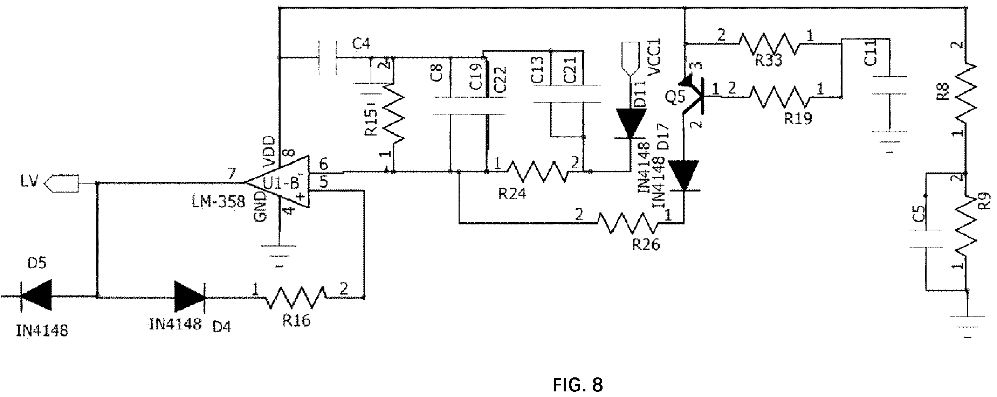

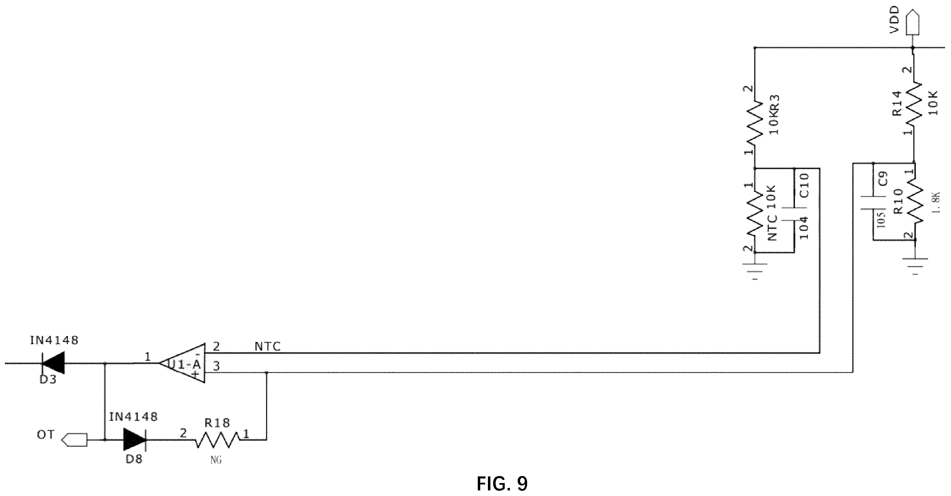

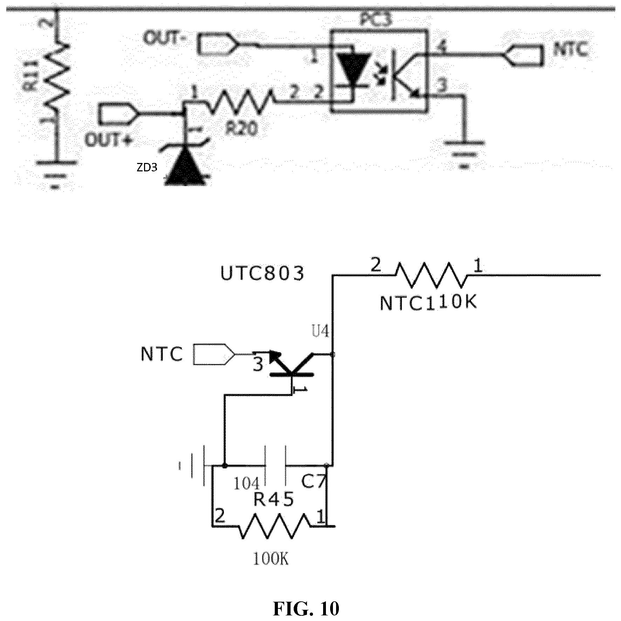

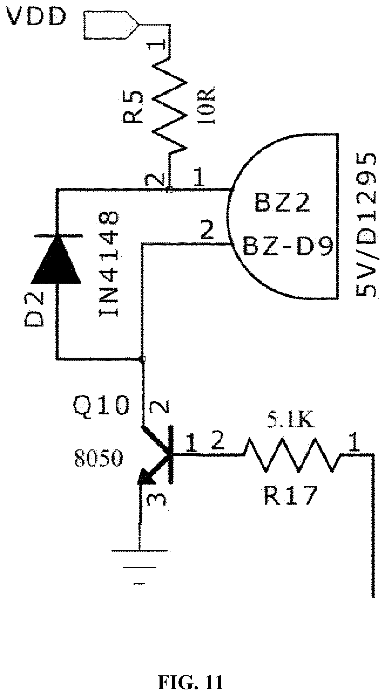

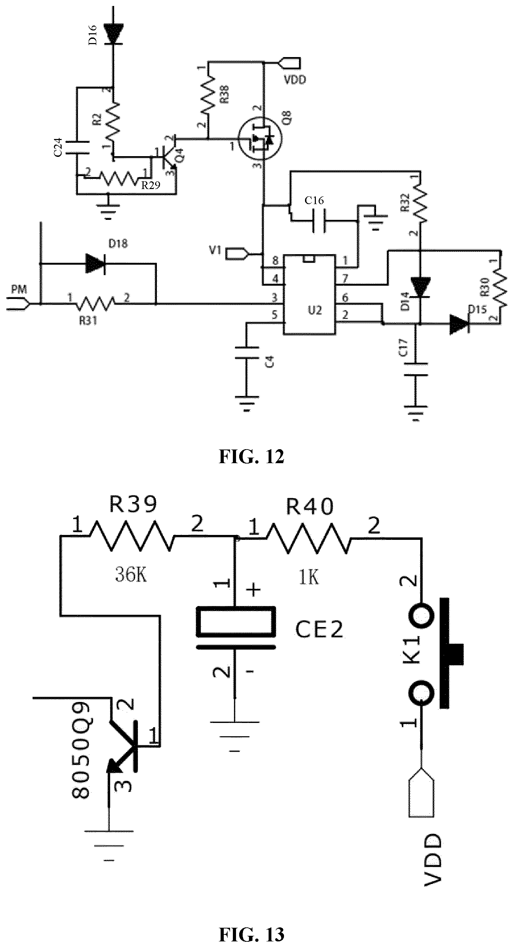

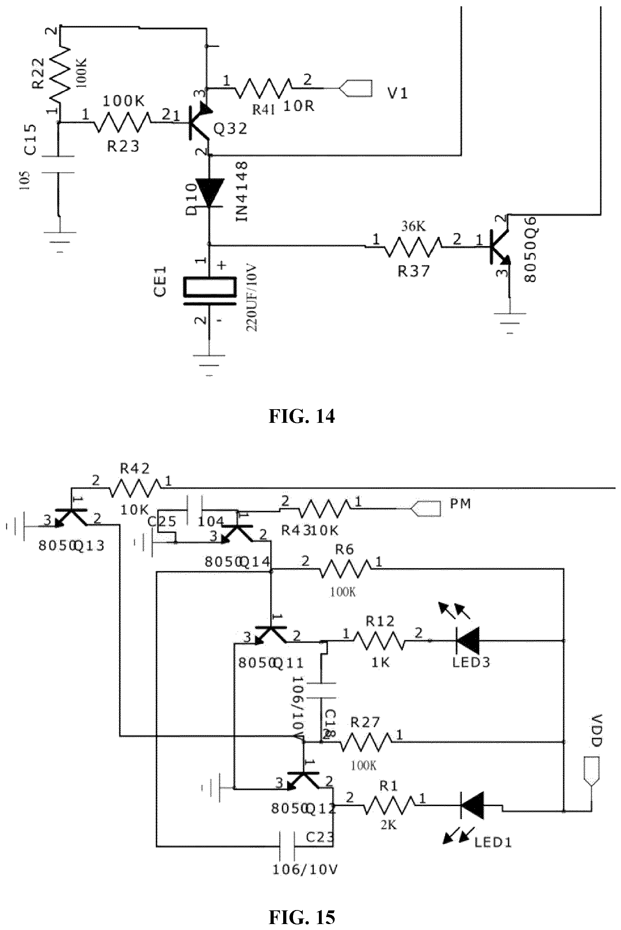

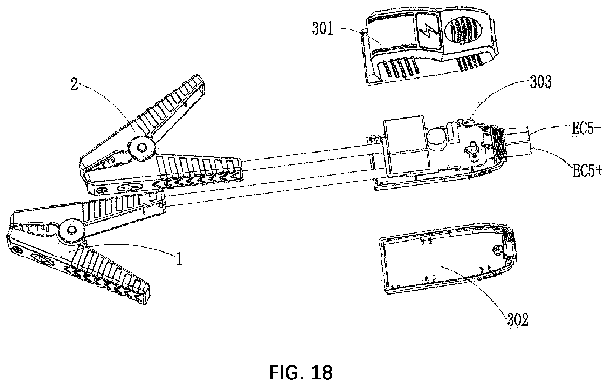

Referring to FIGS. 1-18, in the embodiment of the present disclosure, a safety control circuit includes an EC5 input module 31, an ignition clip module 32, a relay module 33, a timing control module 34, an input high-voltage protection module 35, a voltage-stabilizing power supply module 36, an input low-voltage protection module 37, a high-temperature protection module 38, a low-temperature protection module 39, an error alarm module 391, a first timing module 41, a second timing module 42 and a light display module 43;
the EC5 input module 31 includes an EC5+ terminal and an EC5- terminal;
the ignition clip module 32 includes a red clip wire OUT+ network terminal, a black clip OUT- terminal, a diode D12 and a diode D19; the red clip wire OUT+ network terminal is connected to a first wire 321; the first wire 321 is connected to OUT+ and is connected to one end of the diode D19 and an output end of the relay module 33 at the same time; an input end of the relay module 33 is connected to a second wire 322; the other end of the second wire 322 is connected to the EC5+ terminal; the other end of the diode D19 is connected to a Negative Temperature Coefficient (NTC) resistor; the black clip OUT- terminal is connected to a third wire 323; the third wire 323 is connected to an OUT- network and is connected to one end of the diode D12 at the same time; the other end of the diode D12 is grounded; the other end of the third wire 323 is connected to the EC5- terminal;
the EC5+ terminal is also connected to a VCC+ network, the voltage-stabilizing power supply module 36 and the input high-voltage protection module 35;
the relay module 33 includes a relay RK3, a diode D6, a diode D7, a triode Q1, a resistor R7, a resistor R44, a triode Q2, and a resistor R4; while pin 3 of the relay RK3 is connected to the VCC+ network, after pin 3 is connected to the diode D6, the diode D7 and pin 2 of the triode Q1 in series, pin 1 of the triode Q1 is connected to pin 2 of the resistor R44; pin 3 of the triode Q1 is grounded; pin 1 of the resistor R7 is connected to pin 3 of the triode Q1; after pin 2 of the resistor R7 is connected to pin 2 of the triode Q2, pin 1 of the triode Q2 is connected to pin 2 of the resistor R4; pin 1 of the resistor R4 and pin 3 of the triode Q2 are grounded; pin 2 of the relay RK3 is set as an output end of the relay module 33; pin 1 of the relay RK3 is set as an input end of the relay module 33;
the voltage-stabilizing power supply module 36 includes a diode D1, a capacitor C1, a capacitor C2, a three-terminal voltage-stabilizing chip U3, a capacitor C3, a capacitor C6, and a filter capacitor CE3; one end of the diode D1 is connected to the EC5+ terminal, and the other end is connected to a VIN terminal of the three-end voltage-stabilizing chip U3; the capacitor C1 and the capacitor C2 are connected in parallel to the VIN terminal and a GND terminal of the three-terminal voltage-stabilizing chip U3; the capacitor C3, the capacitor C6 and the filter capacitor CE3 are all connected in parallel to the GND terminal and an OUT terminal of the three-terminal voltage-stabilizing chip U3; the GND terminal of the three-terminal voltage-stabilizing chip U3 is grounded; one end of the capacitor C1 is connected to pin 3 of the three-terminal voltage-stabilizing chip U3, and the other end is connected to pin 2 of the three-terminal voltage-stabilizing chip U3; pin 3 of the three-terminal voltage-stabilizing chip U3 is also connected to a VCC1 power supply voltage;
the input high-voltage protection module 35 includes a zener diode ZD1, a zener diode ZD2, a diode D9, a diode D13, a resistor R13 and a resistor R21; the zener diode ZD2 is connected in series with the diode D9, the diode D13, the resistor R21, the diode D13 and the zener diode ZD1 in sequence, and the other end of the zener diode ZD1 is connected to the OUT+ network;
the input low-voltage protection module 37 includes a diode D5, a diode D4, a resistor R16, an output signal LV, an operational amplifier LM-358, a capacitor C4, a resistor R15, a capacitor C8, a capacitor C19, a capacitor C22, a capacitor C13, a capacitor C21, a resistor R24, a diode D11, the VCC1 power supply voltage, a diode D17, a resistor R26, a triode Q5, a resistor R33, a resistor R19, a capacitor C11, a resistor R8, a resistor R19 and a capacitor C5; the operational amplifier LM-358 includes a VDD terminal of pin 8, a + terminal of pin 5, a - terminal of pin 6, a U1-B terminal of pin 7 and a GND terminal of pin 4; the diode D5, the diode D4 and resistor R16 are connected in series in sequence; pin 7 of the operational amplifier LM-358 is connected to a control signal LV; the U1-B terminal of pin 7 and the + terminal of pin 5 of the operational amplifier LM-358 are respectively connected in parallel to two ends of the diode D4 and the resistor R16; the GND terminal of pin 4 of the operational amplifier LM-358 is grounded; the VDD terminal of pin 8 of the operational amplifier LM-358 is connected to the OUT terminal of pin 1 of the three-terminal voltage-stabilizing chip U3 in the voltage-stabilizing power supply module; the - terminal of pin 6 of the operational amplifier LM-358 is connected in series with the resistor R24, the diode D11 and the VCC1 power supply voltage in sequence; the resistor R15, the capacitor C8, the capacitor C19, the capacitor C22, the capacitor C13 and the capacitor C21 are all connected in parallel to the VVD terminal of pin 8 and the - terminal of pin 6 of the operational amplifier LM-358; the capacitor C4 and the resistor R15 are connected in series; the resistor R26 is connected in series with the diode D17, pin 2 of the triode Q5 and pin 3 of the triode Q5 in sequence and is then connected in parallel to pin 6 of the operational amplifier LM-358 and the VDD terminal of pin 8 of the operational amplifier LM-358; pin 1 of the triode Q5 is grounded after being connected to the resistor R19 and the capacitor C11; two ends 2 and 1 of the resistor R33 are respectively connected in parallel to pin 3 of the triode Q5 and end 1 of the resistor R19; after being connected in series, the capacitor C5 and the resistor R8 are respectively connected to end 2 of the resistor R16 and the OUT terminal of pin 1 in the three-terminal voltage-stabilizing chip U3 in the voltage-stabilizing power supply module; two ends of the resistor R9 are respectively connected to the capacitor C5 and end 1 of the resistor R8; end 1 of the resistor R9 is grounded after being connected to the capacitor C5;
the high-temperature protection module 36 includes a network OT, a diode D3, a diode D8, a temperature comparator U1-A, a resistor R18, an NTC resistor, a capacitor C10, a resistor R3, a capacitor C9, a resistor R10, a resistor R14 and a VDD power supply voltage; the diode D3 is connected to pin 1 of the temperature comparator U1-A; pin 2 of the temperature comparator U1-A is connected to the OUT terminal of pin 1 in the three-terminal voltage-stabilizing chip U3 in the voltage-stabilizing power supply module after being connected to the resistor R3; the network OT is connected in series to the diode D8 and the resistor R18 in sequence; the network OT and pin 2 of the resistor R18 are respectively connected to the diode D3 and pin 3 of the temperature comparator U1-A; pin 2 of the NTC resistor is grounded; pin 1 of the NTC resistor is connected to pin 1 of the resistor R3; the capacitor C10 is connected in parallel to two ends of pin 2 and pin 1 of the NTC resistor; pin 3 of the temperature comparator U1-A is connected in series to the resistor R14 and the VDD power supply voltage; pin 2 of the resistor R10 is grounded; pin 1 of the resistor R10 is connected to pin 1 of the resistor R14; the capacitor C9 is connected in parallel to two ends of pin 1 and pin 2 of the resistor R10;
the timing control module 34 includes a resistor R28, a resistor R34, a triode Q7, a triode Q3, a resistor R35 and a resistor R36; pin 2 of the triode Q3 is connected to pin 1 of the resistor R44 and pin 2 of the triode Q7; pin 1 of the triode Q3 is connected to pin 2 of the resistor R36 and pin 1 of the resistor R35; pin 1 of the resistor R36 is connected to a VDD network; pin 2 of the resistor R35 is grounded; pin 1 of the triode Q7 is connected to pin 1 of the resistor 28 and pin 2 of the resistor R34; pin 1 of the resistor R34 is connected to pin 3 of the triode Q7;
the first timing module 41 includes a PM single-pole power supply voltage, a resistor R31, a diode D18, a chip U2, a V1 single pole power supply voltage, a capacitor C14, a capacitor C16, a capacitor C17, a diode D14, a diode D15, a resistor R30, a resistor R32, a resistor R29, a capacitor C24, a triode Q4, a resistor R2, resistor R38, a Metal Oxide Semiconductor (mos) transistor Q8pin 1 of the resistor R31 is connected to pin 1 of the resistor R44 and the PM network; pin 2 of the resistor R31 is connected to pin 3 of the chip U2; the diode D18 is connected in parallel to the resistor R31; pin 5 of the chip U2 is grounded after being connected to the capacitor C14; pin 2 of the chip U2 is simultaneously connected to pin 6 of the chip U2, one end of the capacitor C17, one end of the diode (D14) and one end of the diode D15; the other end of the capacitor C17 is grounded; the other end of the diode D15 is connected to pin 2 of the resistor R30; pin 1 of the resistor R30 is connected to pin 2 of the resistor R32; pin 1 of the resistor R32 is simultaneously connected to one end of the capacitor C16, pin 4 of the chip U2, pin 8 of the chip U2 and pin 3 of the mos transistor Q8; the other end of the capacitor C16 is grounded; pin 7 of the chip U2 is simultaneously connected to the other end of the diode D14, pin 1 of the resistor R30 and pin 2 of the resistor R32; pin 1 of the mos transistor Q8 is simultaneously connected to pin 2 of the triode Q4 and pin 2 of the resistor R38 pin 1 of the resistor R38 is connected to pin 2 of the mos transistor Q8 and the VDD network; pin 3 of the triode Q4 is grounded; pin 1 of the resistor R29 is connected to the pin 1 of the triode Q4 and pin 2 of the resistor R29 is grounded; pin 2 of the resistor R2 is connected to one end of the diode D16;
the low-temperature protection module 39 includes a resistor R11, a zener diode ZD3, a resistor R20, a photoelectric coupler PC3, an NTC network, a triode U4, a capacitor C7 and a resistor R45; pin 2 of the zener diode ZD3 is connected to the other end of the diode D16; pin 1 of the zener diode ZD3 is simultaneously connected to the OUT+ network and pin 1 of the resistor R20; pin 2 of the resistor R20 is connected to pin 2 of the photoelectric coupler PC3; pin 3 of the photoelectric coupler PC3 is grounded; pin 4 of the photoelectric coupler PC3 is connected to the NTC; pin 1 of the photoelectric coupler PC3 is connected to the OUT- network; pin 2 of the resistor R11 is connected to pin 1 of the resistor R4; pin 1 of the resistor R11 is grounded;
the second timing module 42 includes a capacitor C15, a resistor R22, a resistor R23, a triode Q32, a resistor R41, a V1 network, a diode D10, a filter capacitor CE1, a resistor R37, and a triode Q6; pin 3 of the triode Q32 is simultaneously connected to pin 1 of the resistor R41 and pin 2 of the resistor R22; pin 2 of the resistor R41 is connected to the V1 network; pin 1 of the resistor R22 is simultaneously connected to pin 1 of R23 and one end of the capacitor C15; the other end of the capacitor C15 is grounded; pin 2 of the triode Q32 is connected to one end of the diode D10; the other end of the diode D10 is simultaneously connected to pin 1 of the filter capacitor CE1 and pin 1 of the resistor R37; pin 2 of the filter capacitor CE1 is grounded; pin 2 of the resistor R37 is connected to pin 1 of the triode Q6; pin 3 of the triode Q6 is grounded; pin 2 of the triode Q6 is connected to pin 1 of the triode Q3;
the error alarm module 391 includes a resistor R17, a triode Q10, a diode D2, a resistor R5 and a buzzer; pin 1 of the resistor R17 is connected to pin 1 of the resistor R4; pin 2 of the resistor R17 is connected to pin 1 of the triode Q10; pin 3 of the triode Q10 is grounded; pin 2 of the triode Q10 is connected to pin 2 of the buzzer; two ends of the diode D2 are respectively connected to pin 1 and pin 2 of the buzzer; pin 2 of the resistor R5 is connected to pin 1 of the buzzer; pin 1 of the resistor R5 is connected to the VDD network;
the light display module 43 includes a resistor R42, a triode Q13, a capacitor C25, a triode Q14, a resistor R43, a resistor R6, a triode Q11, a resistor R12, a red light LED3, a capacitor C18, a resistor R27, a triode Q12, a resistor R1, a capacitor C23 and a green light LED1; pin 1 of the resistor R42 is connected to pin 1 of the resistor R4; pin 2 of the resistor R42 is connected to pin 1 of the triode Q13; pin 3 of the triode Q13 is grounded; pin 2 of the triode Q13 is simultaneously connected to pin 1 of the triode Q12, pin 2 of the resistor R27 and one end of the capacitor C18; pin 3 of the triode Q12 is connected to pin 3 of the triode Q11 and grounded; pin 2 of the triode Q12 is simultaneously connected to pin 2 of the resistor R1 and one end of the capacitor C23; the other end of C23 is simultaneously connected to pin 2 of the triode Q14, pin 1 of the triode Q11 and pin 2 of the resistor R6; pin 2 of the triode Q11 is simultaneously connected to the other end of the capacitor C18 and pin 1 of the resistor R12; pin 2 of the resistor R12 is connected to one end of the red light LED3; pin 1 of the resistor R1 is connected to one end of the green light LED1; pin 1 of the resistor R6 is connected to VDD after being connected to the other end of the red light LED3, pin 1 of the resistor R27 and the other end of the green light LED1; pin 3 of the triode Q14 is grounded and is connected to one end of the capacitor C25 at the same time; the other end of the capacitor C25 is simultaneously connected to pin 1 of the triode Q14 and pin 2 of the resistor R43; and pin 1 of the resistor R43 is connected to the PM network.

Preferably, the above safety control circuit further includes an access load detection module 44, wherein a detection end of the access load detection module 44 is used for acquiring a voltage signal of a load terminal; a signal output end of the access load detection module 4 is coupled to a signal input end of the first timing module 41.

As a further solution of the present disclosure, the access load detection module 44 includes a comparator U1-D, a diode D22, a diode D25, a resistor R51, a resistor R52, a resistor R53, a resistor R54, a resistor R55, a capacitor C20, a capacitor C12, and a voltage regulator ZD2; pin 13 of the comparator U1-D is connected to an anode of the diode D25, pin 2 of the resistor R52, pin 2 of the resistor R55, and one end of the capacitor C20;
a cathode of the diode D25 is connected to the load terminal; pin 1 of the resistor R52 is connected to the VDD network, and the other end of the capacitor C20 and pin 1 of the resistor R55 are grounded;
pin 12 of the comparator U1-D is connected to pin 1 of the resistor R51, pin 2 of the resistor R53, pin 1 of the resistor R54, pin 1 of the voltage regulator ZD2, and one end of the capacitor C12;
pin 2 of the resistor R51 is connected to a cathode of the diode D22, and an anode of the diode D22 is connected to the load terminal;
pin 2 of the resistor R54 is connected to a 2.5V power supply terminal;
pin 1 of the resistor R53, the other end of the capacitor C12, and pin 2 of the voltage regulator ZD2 are grounded; and
pin 14 of the comparator U1-D is connected to an anode of the diode D24, and a cathode of the diode D24 is connected to pin 2 of the resistor R2.

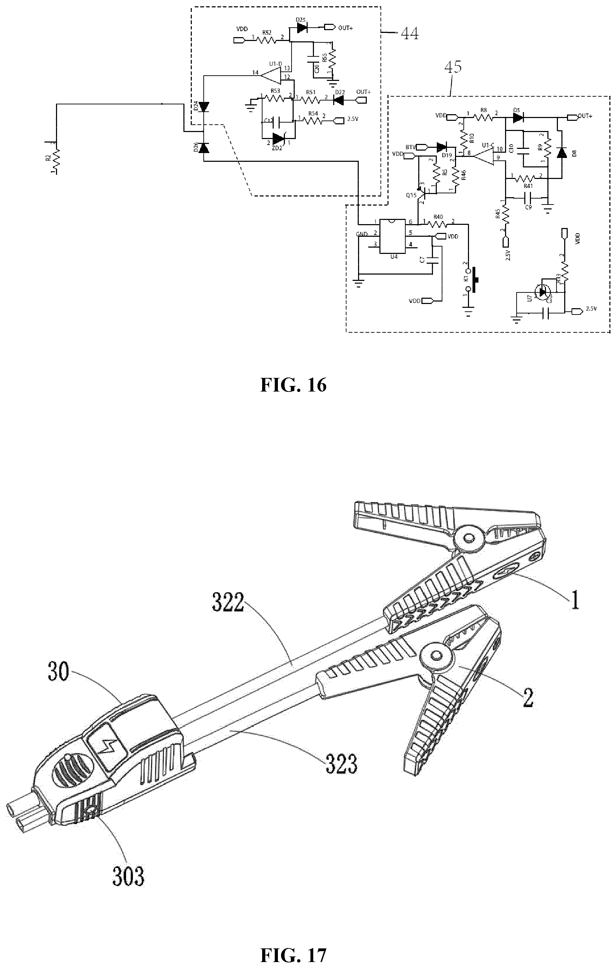

Referring to FIG. 16, when no load is accessed, a level of pin 13 (corresponding to an inverting end) of the comparator U1-D is lower than that of pin 12 (corresponding to an in-phase end). Pin 14 of the comparator U1-D outputs a low level, and the low level cannot trigger the triode Q4, so that the triode Q4 is in a switched off state.

The present disclosure further provides an automobile emergency starting clamp which is cooperatively used with an automobile emergency power supply. The automobile emergency starting clamp includes an anode cable clamp 1 provided with a red clip wire OUT+ terminal; a cathode cable clamp 2 provided with a black clip OUT-terminal; and a control box 30. The control box 30 includes a control box upper shell 301, a control box lower shell 302, an on/off button 303 and the above-mentioned safety control circuit.

Preferably, in the above-mentioned automobile emergency starting clamp, the control box upper shell 301 and the control box lower shell 302 are located above and below and are fixedly connected to each other; the safety control circuit is arranged between the control box upper shell 301 and the control box lower shell 302; and the on/off button 303 is arranged on one side of the control box upper shell 301 and is in contact connection with the button switch K1 of the safety control circuit.

The above detailed description is a specific description of one of the possible embodiments of the present disclosure. This embodiment is not intended to limit the patent scope of the present disclosure. Any equivalent implementation or modification that does not deviate from the appended claims of the present disclosure shall fall within the patent scope of this solution.

## Claims

1. A safety control circuit, comprising an EC5 input module (31), an ignition clip module (32), a relay module (33), a timing control module (34), an input high-voltage protection module (35), a voltage-stabilizing power supply module (36), an input low-voltage protection module (37), a high-temperature protection module (38), an error alarm module (391), a first timing module (41), a second timing module (42) and a light display module (43);
wherein the EC5 input module (31) comprises a positive terminal (EC5+) and a negative terminal (EC5-);
the ignition clip module (32) comprises a clip wire positive output terminal (OUT+), a clip wire negative output terminal (OUT-), a twelfth diode (D12) and a nineth diode (D19); the clip wire terminal (OUT+) is connected to a first wire (321); the first wire (321) is connected to the clip wire positive output terminal (OUT+) and is connected to one end of the nineth diode (D19) and an output end of the relay module (33) an input end of the relay module (33) is connected to a second wire (322); the other end of the second wire (322) is connected to the positive terminal (EC5+); the other end of the nineth diode (D19) is connected to a Negative Temperature Coefficient , NTC, resistor; the clip wire negative output terminal (OUT-) is connected to a third wire (323); the third wire (323) is connected to the clip wire negative output terminal (OUT-) and is connected to one end of the twelfth diode (D12) the other end of the twelfth diode (D12) is grounded; the other end of the third wire (323) is connected to the negative terminal (EC5-);
the positive terminal (EC5+) is also connected to a positive power terminal (VCC+), the voltage-stabilizing power supply module (36) and the input high-voltage protection module (35);
the relay module (33) comprises a relay (RK3), a sixth diode (D6), a seventh diode (D7), a first triode (Q1), a seventh resistor (R7), a forty-fourth resistor (R44), a second triode (Q2), and a fourth resistor (R4); a third pin of the relay (RK3) is connected to the positive power terminal (VCC+) and a fourth pin of the relay (RK3) is connected to the sixth diode (D6), the third pin of the relay (RK3) is connected to the sixth diode (D6), the seventh diode (D7) and a second pin of the first triode (Q1) in series, a first pin of the first triode (Q1) is connected to a second pin of the forty-fourth resistor (R44); a third pin of the first triode (Q1) is grounded; a first pin of the seventh resistor (R7) is connected to the third pin of the first triode (Q1); a second pin of the seventh resistor (R7) is connected to a second pin of the second triode (Q2), a first pin of the second triode (Q2) is connected to a second pin of the fourth resistor (R4); a first pin of the fourth resistor (R4) and a third pin of the second triode (Q2) are grounded; a second pin of the relay (RK3) is set as the output end of the relay module (33); a first pin of the relay (RK3) is set as the input end of the relay module (33);
the voltage-stabilizing power supply module (36) comprises a first diode (D1), a first capacitor (C1), a second capacitor (C2), a three-terminal voltage-stabilizing chip (U3), a third capacitor (C3), a sixth capacitor (C6), and a third filter capacitor (CE3); one end of the first diode (D1) is connected to the positive terminal (EC5+), and the other end the first diode (D1) is connected to a third terminal of the three-terminal voltage-stabilizing chip (U3); the first capacitor (C1) and the second capacitor (C2) are connected in parallel to the third terminal and a second terminal of the three-terminal voltage-stabilizing chip (U3); the third capacitor (C3), both the sixth capacitor (C6) and the third filter capacitor (CE3) are connected in parallel to the second terminal and a first terminal of the three-terminal voltage-stabilizing chip (U3); the second terminal of the three-terminal voltage-stabilizing chip (U3) is grounded; one end of the first capacitor (C1) is connected to the third pin of the three-terminal voltage-stabilizing chip (U3), and the other end of the first capacitor (C1) is connected to the second pin of the three-terminal voltage-stabilizing chip (U3); the third pin of the three-terminal voltage-stabilizing chip (U3) is also connected to a power supply voltage (VCC1);
the input high-voltage protection module (35) comprises a first zener diode (ZD1), a second zener diode (ZD2), a nineth diode (D9), a thirteenth diode (D13), a thirteenth resistor (R13) and a twenty-first resistor (R21); an anode of the second zener diode (ZD2) is connected in series with the nineth diode (D9), the thirteenth resistor (R13), the twenty-first resistor (R21), the thirteenth diode (D13) and the first zener diode (ZD1) in sequence, a cathode of the second Zener diode (ZD2) is connected to the EC5 input module (31) and the other end of the first zener diode (ZD1) is connected to the clip wire positive output terminal (OUT+);
the input low-voltage protection module (37) comprises a fifth diode (D5), a fourth diode (D4), a sixteenth resistor (R16), a control signal (LV), an operational amplifier (LM-358), a fourth capacitor (C4), a fifteenth resistor (R15), an eighth capacitor (C8), a nineteenth capacitor (C19), a twenty-second capacitor (C22), a thirteenth capacitor (C13), a twenty-first capacitor (C21), a twenty-fourth resistor (R24), a eleventh diode (D11), a power supply voltage (VCC1), a seventeenth diode (D17), a twenty-sixth resistor (R26), a fifth triode (Q5), a thirty-third resistor (R33), a nineteenth resistor (R19), an eleventh capacitor (C11), an eighth resistor (R8), a nineth resistor (R9) and a fifth capacitor (C5); the operational amplifier (LM-358) comprises a fifth pin (8), a second pin (5), a third pin (6), a fourth pin (7) and a first pin (4); the fifth diode (D5), the fourth diode (D4) and the sixteenth resistor (R16) are connected in series in sequence; the fourth pin (7) of the operational amplifier (LM-358) is connected to the control signal (LV); the fourth pin (7) and the second pin (5) of the operational amplifier (LM-358) are respectively connected in parallel to two ends of the fourth diode (D4) and the sixteenth resistor (R16); the first pin (4) of the operational amplifier (LM-358) is grounded; the fifth pin (8) of the operational amplifier (LM-358) is connected to the first pin of the three-terminal voltage-stabilizing chip (U3) in the voltage-stabilizing power supply module (36); the third pin (6) of the operational amplifier (LM-358) is connected in series with the twenty-fourth resistor (R24), the eleventh diode (D11) and the power supply voltage (VCC1) power supply voltage in sequence; the fifteenth resistor (R15), the eighth capacitor (C8), the nineteenth capacitor (C19), the twenty-second capacitor (C22), the thirteenth capacitor (C13) and the twenty-first capacitor (C21) are all connected in parallel to the eighth pin and the third pin of the operational amplifier (LM-358); the fourth capacitor (C4) and the fifteenth resistor (R15) are connected in series; the twenty-sixth resistor (R26) is connected in series with the seventeenth diode (D17), a second pin of the fifth triode (Q5) and a third pin of the fifth triode (Q5) in sequence and is connected in parallel to the third pin of the operational amplifier (LM-358) and the fifth pin of the operational amplifier (LM-358); a first pin of the fifth triode (Q5) is grounded through the nineteenth resistor (R19) and the eleventh capacitor (C11); two ends of the thirty-third resistor (R33) are respectively connected in parallel to the third pin of the fifth triode (Q5) and a first pin of the nineteenth resistor (R19); the fifth capacitor (C5) and the eighth resistor (R8) are connected in series and are respectively connected to a second end of the sixteenth resistor (R16) and the first pin of the three-terminal voltage-stabilizing chip (U3) in the voltage-stabilizing power supply module (36); two ends of the nineth resistor (R9) are respectively connected to the fifth capacitor (C5) and a first end of the eighth resistor (R8); a first end of the nineth resistor (R9) is connected to the fifth capacitor (C5) and is grounded
the high-temperature protection module (38) comprises a network (OT), a third diode (D3), an eighth diode (D8), a temperature comparator (U1-A), an eighteenth resistor (R18), a second NTC resistor, a tenth capacitor (C10), a third resistor (R3), a nineth capacitor (C9), a tenth resistor (R10), a fourteenth resistor (R14) and a power supply voltage (VDD); the third diode (D3) is connected to a first pin of the temperature comparator (U1-A); a second pin of the temperature comparator (U1-A) is connected to the first pin of the three-terminal voltage-stabilizing chip (U3) in the voltage-stabilizing power supply module (36) through the third resistor (R3); the network (OT) is connected in series to the eighth diode (D8) and a second pin of the eighteenth resistor (R18) in sequence; the network (OT) and a first pin of the eighteenth resistor (R18) are respectively connected to the third diode (D3) and a third pin of the temperature comparator (U1-A); a second pin of the second NTC resistor is grounded; a first pin of the second NTC resistor is connected to a first pin of the third resistor (R3); the tenth capacitor (C10) is connected in parallel to two ends of the second NTC resistor; the third pin of the temperature comparator (U1-A) is connected in series to the fourteenth resistor (R14) and the power supply voltage (VDD); a second pin of the tenth resistor (R10) is grounded; a first pin of the tenth resistor (R10) is connected to a first pin of the fourteenth resistor (R14) and a second pin of the tenth resistor (R10) is grounded; the nineth capacitor (C9) is connected in parallel to two ends of the tenth resistor (R10);
the timing control module (34) comprises a twenty-eighth resistor (R28), a thirty-fourth resistor (R34), a seventh triode (Q7), a third triode (Q3), a thirty-fifth resistor (R35) and a thirty-sixth resistor (R36); a second pin of the third triode (Q3) is connected to a first pin of the forty-fourth resistor (R44) of the relay module (33) and a second pin of the seventh triode (Q7); a first pin of the third triode (Q3) is connected to a second pin of the thirty-sixth resistor (R36) and a first pin of the thirty-fifth resistor (R35); a third pin of the third triode (Q3) is grounded; a first pin of the thirty-sixth resistor (R36) is connected to a network (VDD); a second pin of the thirty-fifth resistor (R35) is grounded; a first pin of the seventh triode (Q7) is connected to a first pin of the twenty-eighth resistor (R28) and a second pin of the thirty-fourth resistor (R34); a second pin of the twenty-eighth resistor (R28) is connected to the second timing module (42); a first pin of the thirty-fourth resistor (R34) is connected to a third pin of the seventh triode (Q7) and is grounded;
the first timing module (41) comprises a network (PM), a thirty-first resistor (R31), an eighteenth diode (D18), a second chip (U2), a network (V1), a fourteenth capacitor (C14), a sixteenth capacitor (C16), a seventh capacitor (C17), a fourteenth diode (D14), a fifteenth diode (D15), a thirtieth resistor (R30), a thirty-second resistor (R32), a twenty-nineth resistor (R29), a capacitor C24, a triode Q4, a second resistor (R2), a thirty-eighth resistor (R38), an eighth Metal Oxide Semiconductor, mos, transistor (Q8)a first pin of the thirty-first resistor (R31) is connected to the first pin of the forty-fourth resistor (R44) of the relay module (33) and the network (PM); a second pin of the thirty-first resistor (R31) is connected to a third pin of the second chip (U2); the eighteenth diode (D18) is connected in parallel to the thirty-first resistor (R31); a fifth pin of the second chip (U2) is grounded through the fourteenth capacitor (C14); a second pin of the second chip (U2) is simultaneously connected to a sixth pin of the second chip (U2), one end of the seventh capacitor (C17), one end of the fourteenth diode (D14) and one end of the fifteenth diode (D15); the other end of the seventh capacitor (C17) is grounded; the other end of the fifteenth diode (D15) is connected to a second pin of the thirtieth resistor (R30); a first pin of the thirtieth resistor (R30) is connected to a second pin of the thirty-second resistor (R32); a first pin of the thirty-second resistor (R32) is simultaneously connected to one end of the sixteenth capacitor (C16), a fourth pin of the second chip (U2), an eighth pin of the second chip (U2) and a third pin of the eighth mos transistor (Q8); a first pin of the second chip (U2) is connected to the other end of the sixteenth capacitor (C16) and the other end of the sixteenth capacitor (C16) is grounded; a seventh pin of the second chip (U2) is simultaneously connected to the other end of the fourteenth diode (D14), the first pin of the thirtieth resistor (R30) and the second pin of the thirty-second resistor (R32); a first pin of the eighth mos transistor (Q8) is simultaneously connected to a second pin of the cctriode (Q4) and a second pin of the thirty-eighth resistor (R38); a first pin of the thirty-eighth resistor (R38) is connected to a second pin of the eighth mos transistor (Q8) and the VDD network; a third pin of the pin 3 of the fourth triode (Q4) is grounded; a first pin of the twenty-nineth resistor (R29) is connected to a first pin of the fourth triode (Q4) and a second pin of the twenty-nineth resistor (R29) is grounded; a second pin of the second resistor (R2) is connected to one end of the sixteenth diode (D16);
the safety control circuit is characterized that,
the safety control circuit further comprises a low-temperature protection module (39), the low-temperature protection module (39) comprises an eleventh resistor (R11), a third zener diode (ZD3), a twentieth resistor (R20), a photoelectric coupler (PC3), a network (NTC), a fourth triode (U4), a seventh capacitor (C7) and a forty-fifth resistor (R45); a second pin of the third zener diode (ZD3) is connected to the other end of the sixteenth diode (D16) of the first timing module (41); a first pin of the third zener diode (ZD3) is simultaneously connected to the clip wire positive output terminal (OUT+) and a first pin of the twentieth resistor (R20); a second pin of the twentieth resistor (R20) is connected to a second pin of the photoelectric coupler (PC3); a third pin of the photoelectric coupler (PC3) is grounded; a fourth pin of the photoelectric coupler (PC3) is connected to a network (NTC); a first pin of the photoelectric coupler (PC3) is connected to the clip wire negative output terminal (OUT-); a second pin of the eleventh resistor (R11) is connected to the first pin of the fourth resistor (R4) of the relay module (33); a first pin of the eleventh resistor (R11) is grounded; a first pin of the fourth triode (U4) is connected to a second pin of the forty-fifth resistor (R45), a second pin of the fourth triode (U4) is connected to both a first pin of the forty-fifth resistor (R45) and a second pin of a third
NTC resistor (NTC110K), and a third pin of the fourth triode (U4) is connected to the network (NTC); the seventh capacitor (C7) is parallelly connected to both ends of the forty-fifth resistor (R45); and a first pin of the third
resistor (NTC110K) is
connected to the first pin of the third chip (U3) of the voltage-stabilizing power supply module (36);
the second timing module (42) comprises a fifth capacitor (C15), a twenty-second resistor (R22), a twenty-third resistor (R23), a thirty-second triode (Q32), a forty-first resistor (R41), a network (V1), a tenth diode (D10), a first filter capacitor (CE1), a thirty-seventh resistor (R37), and a sixth triode (Q6); a third pin of the thirty-second triode (Q32) is simultaneously connected to a first pin of the forty-first resistor (R41) and a second pin of the twenty-second resistor (R22); a second pin of the forty-first resistor (R41) is connected to the network (V1); a first pin of the twenty-second resistor (R22) is simultaneously connected to a first pin of the twenty-third resistor (R23) and one end of the fifth capacitor (C15); the other end of the fifth capacitor (C15) is grounded; a first pin of the thirty-second triode (Q32) is connected to a second pin of the twenty-third resistor (R23); a second pin of the thirty-second triode (Q32) is connected to one end of the tenth diode (D10); the other end of the tenth diode (D10) is simultaneously connected to a first pin of the first filter capacitor (CE1) and a first pin of the thirty-seventh resistor (R37); a second pin of the first filter capacitor (CE1) is grounded; a second pin of the thirty-seventh resistor (R37) is connected to a first pin of the sixth triode (Q6); a third pin of the sixth triode (Q6) is grounded; a second pin of the sixth triode (Q6) is connected to the first pin of the third triode (Q3) of the timing control module (34);
the error alarm module (391) comprises a seventeenth resistor (R17), a tenth triode (Q10), a second diode (D2), a fifth resistor (R5) and a buzzer (BZ2); a first pin of the seventeenth resistor (R17) is connected to the first pin of the fourth resistor (R4) of the relay module (33); a second pin of the seventeenth resistor (R17) is connected to a first pin of the tenth triode (Q10); a third pin of the tenth triode (Q10) is grounded; a second pin of the tenth triode (Q10) is connected to a second pin of the buzzer (BZ2); two ends of the second diode (D2) are respectively connected to a first pin and the second pin of the buzzer (BZ2); a second pin of the fifth resistor (R5) is connected to the first pin of the buzzer (BZ2); a first pin of the fifth resistor (R5) is connected to a network (VDD);
the light display module (43) comprises a fourth-second resistor (R42), a thirteenth triode (Q13), a twenty-fifth capacitor (C25), a fourteenth triode (Q14), a forty-third resistor (R43), a sixth resistor (R6), a eleventh triode (Q11), a twelfth resistor (R12), a first light (LED3), a eighteenth capacitor (C18), a twenty-seventh resistor (R27), a twelfth triode (Q12), a first resistor (R1), a twenty-third capacitor (C23) and a second light (LED1); a first pin of the fourth-second resistor (R42) is connected to a first pin of the fourth resistor (R4); a second pin of the fourth-second resistor (R42) is connected to a first pin of the thirteenth triode (Q13); a third pin of the thirteenth triode (Q13) is grounded; a second pin of the thirteenth triode (Q13) is simultaneously connected to a first pin of the twelfth triode (Q12), a second pin of the twenty-seventh resistor (R27) and one end of the eighteenth capacitor (C18); a third pin of the twelfth triode (Q12) is connected to a third pin of the eleventh triode (Q11) and grounded; a second pin of the twelfth triode (Q12) is simultaneously connected to a second pin of the first resistor (R1) and one end of the twenty-third capacitor (C23); the other end of the twenty-third capacitor (C23) is simultaneously connected to a second pin of the fourteenth triode (Q14), a first pin of the eleventh triode (Q11) and a second pin of the sixth resistor (R6); a second pin of the eleventh triode (Q11) is simultaneously connected to the other end of the eighteenth capacitor (C18) and a first pin of the twelfth resistor (R12); a second pin of the twelfth resistor (R12) is connected to one end of the first light (LED3); a first pin of the first resistor (R1) is connected to one end of the second light (LED1); a first pin of the sixth resistor (R6) is connected to a power supply (VDD) and is connected to the other end of the first light (LED3), a first pin of the twenty-seventh resistor (R27) and the other end of the second light (LED1); a third pin of the fourteenth triode (Q14) is grounded and is connected to one end of the twenty-fifth capacitor (C25); the other end of the twenty-fifth capacitor (C25) is simultaneously connected to a first pin of the fourteenth triode (Q14) and a second pin of the forty-third resistor (R43); and a first pin of the forty-third resistor (R43) is connected to a network (PM);
the safety control circuit further comprises an access load detection module (44), wherein a detection end of the access load detection module (44) is used for acquiring a voltage signal of a load terminal; a signal output end of the access load detection module (44) is coupled to a signal input end of the first timing module (41).

2. The safety control circuit according to claim 1, wherein
the access load detection module (44) comprises a comparator (U1-D), a twenty-second diode (D22), a twenty-fifth diode (D25), a fifty-first resistor (R51), a fifty-second resistor (R52), a fifty-third resistor (R53), a fifty-fourth resistor (R54), a fifty-fifth resistor (R55), a twenty capacitor (C20), a twelfth capacitor (C12), and a voltage regulator (ZD2); a second pin (13) of the comparator (U1-D) is connected to an anode of the twenty-fifth diode (D25), a second pin of the fifty-second resistor (R52), a second pin of the fifty-fifth resistor (R55), and one end of the twenty capacitor (C20);
a cathode of the twenty-fifth diode (D25) is connected to the load terminal; a first pin of the fifty-second resistor (R52) is connected to the network (VDD), and the other end of the twenty capacitor (C20) and a first pin of the fifty-fifth resistor (R55) are grounded;
a first pin (12) of the comparator (U1-D) is connected to a first pin of the fifty-first resistor (R51), a second pin of the fifty-third resistor (R53), a first pin of the fifty-fourth resistor (R54), a first pin of the voltage regulator (ZD2), and one end of the twelfth capacitor (C12);
a second pin of the fifty-first resistor (R51) is connected to a cathode of the twenty-second diode (D22), and an anode of the twenty-second diode (D22) is connected to the load terminal;
a second pin of the fifty-fourth resistor (R54) is connected to a 2.5V power supply terminal;
a first pin of the fifty-third resistor (R53), the other end of the twelfth capacitor (C12), and a second pin of the voltage regulator (ZD2) are grounded; and
a third pin (14) of the comparator (U1-D) is connected to an anode of a twenty-fourth diode (D24), and a cathode of the twenty-fourth diode (D24) is connected to the second pin of the resistor (R2) of the first timing module (41).

3. The safety control circuit according to claim 1,
further comprising a short circuit detection module (45), wherein a detection end of the short circuit detection module (45) is used for acquiring a current signal during load operation; and a signal output end of the short circuit detection module (45) is coupled to a signal input end of the first timing module (41).

4. The safety control circuit according to claim 3, wherein
the short circuit detection module (45) comprises a comparator (U1-C), a twenty-seventh diode (D27), an twenty-eighth diode (D28), a twenty-nineth diode (D29), a forty-sixth resistor (R46), a forty-seventh resistor (R47), a forty-eighth resistor (R48), a forty-nineth resistor (R49), a fifty-sixth resistor (R56), a fifty-seventh resistor (R57), a fifty-eighth resistor (R58), a fifty-nineth resistor (R59), a sixth transistor (Q16), a twenty-sixth capacitor (C26), a twenty-seventh capacitor (C27), a twenty-eighth capacitor (C28), a chip (U4), and a twenty-sixth diode (D26);
a first pin (10) of the comparator (U1-C) is connected to an anode of the twenty-seventh diode (D27), a second pin of the forty-seventh resistor (R47), a second pin of the forty-eighth resistor (R48), and one end of the twenty-eighth capacitor (C28); a cathode of the twenty-seventh diode (D27) and a cathode of the twenty-eighth diode (D28) are connected to the load terminal;
a first pin of the forty-seventh resistor (R47) and a second pin of the forty-nineth resistor (R49) are connected to the VDD network; a first pin of the forty-eighth resistor (R48) and the other end of the twenty-eighth capacitor (C28) are grounded;
a second pin (9) of the comparator (U1-C) is connected to a first pin of the fifty-seventh resistor (R57), a first pin of the fifty-eighth resistor (R58), and one end of the twenty-seventh capacitor (C27); the other end of the twenty-seventh capacitor (C27) is grounded; a second pin of the fifty-seventh resistor (R57) and an anode of the twenty-eighth diode (D28) are grounded; a second pin of the fifty-eighth resistor (R58) is connected to the 2.5V power supply terminal;
a third pin (8) of the comparator (U1-C) is connected to a first pin of the forty-nineth resistor (R49), a second pin of the fifty-nineth resistor (R59), and a cathode of the twenty-nineth diode (D29); an anode of the twenty-nineth diode (D29) is connected to a signal terminal BTV;
a first pin of the forty-sixth resistor (R46) and a first pin of the fifty-nineth resistor (R59) are connected to a first pin of the sixteenth transistor (Q16); a third pin of the sixteenth transistor (Q16) and a second pin of the forty-sixth resistor (R46) are connected to a network (VDD); a second pin of the sixteenth transistor (Q16) is connected to a sixth pin (6) of the fourth chip (U4) and a first pin of the fifty-sixth resistor (R56); a second pin of the fifty-sixth resistor (R56) is connected to pin 2 of the button switch K1; pin 1 of the button switch K1 is grounded;
a fifth pin (5) of the fourth chip (U4) and one end of the twenty-sixth capacitor (C26) are connected to the VDD network; a second pin of the fourth chip (U4) and the other end of the twenty-sixth capacitor (C26) are grounded; and
a first pin of the fourth chip (U4) is connected to the second pin of the second resistor (R2) through the twenty-sixth diode (D26); and a third pin and a fourth pin of the fourth chip (U4) are suspended.

5. An automobile emergency starting clamp, comprising an anode cable clamp (1) provided with an input terminal (OUT+); a cathode cable clamp (2) provided with an output terminal (OUT-); and a control box (30), wherein the control box (30) comprises a control box upper shell (301), a control box lower shell (302), an on/off button (303) and the safety control circuit according to any one of claims 1 to 4.

6. The automobile emergency starting clamp according to claim 5, wherein the control box upper shell (301) and the control box lower shell (302) are located above and below and are fixedly connected to each other; the safety control circuit is arranged between the control box upper shell (301) and the control box lower shell (302); and the on/off button (303) is arranged on one side of the control box upper shell (301) and is in contact connection with the button switch (K1) of the safety control circuit.

## Patentansprüche

1. Sicherheitssteuerschaltung, umfassend ein EC5-Eingangsmodul (31), ein Starthilfeklemmenmodul (32), ein Relaismodul (33), ein Zeitsteuerungsmodul (34), ein Eingangshochspannungsschutzmodul (35), ein Spannungsstabilisierungs-Stromversorgungsmodul (36), ein Eingangsunterspannungsschutzmodul (37), ein Hochtemperaturschutzmodul (38), ein Fehleralarmmodul (391), ein erstes Zeitgebermodul (41), ein zweites Zeitgebermodul (42) und ein Leuchtanzeigemodul (43);
wobei das EC5-Eingangsmodul (31) einen positiven Anschluss (EC5+) und einen negativen Anschluss (EC5-) umfasst;
wobei das Starthilfeklemmenmodul (32) einen positiven Klemmenleitungs-Ausgangsanschluss (OUT+), einen negativen Klemmenleitungs-Ausgangsanschluss (OUT-), eine zwölfte Diode (D12) und eine neunte Diode (D19) umfasst; der positive Klemmenleitungs-Ausgangsanschluss (OUT+) mit einer ersten Leitung (321) verbunden ist; die erste Leitung (321) mit dem positiven Klemmenleitungs-Ausgangsanschluss (OUT+) verbunden ist und mit einem Ende der neunten Diode (D19) und einem Ausgangsanschluss des Relaismoduls (33) verbunden ist; ein Eingangsanschluss des Relaismoduls (33) mit einer zweiten Leitung (322) verbunden ist; das andere Ende der zweiten Leitung (322) mit dem positiven Anschluss (EC5+) verbunden ist; das andere Ende der neunten Diode (D19) mit einem NTC-Widerstand (Widerstand mit negativem Temperaturkoeffizienten) verbunden ist; der negative Klemmenleitungs-Ausgangsanschluss (OUT-) mit einer dritten Leitung (323) verbunden ist; die dritte Leitung (323) mit dem negativen Klemmenleitungs-Ausgangsanschluss (OUT-) verbunden ist und mit einem Ende der zwölften Diode (D12) verbunden ist; das andere Ende der zwölften Diode (D12) geerdet ist; und das andere Ende der dritten Leitung (323) mit dem negativen Anschluss (EC5-) verbunden ist;
wobei der positive Anschluss (EC5+) ferner mit einem positiven Stromversorgungsanschluss (VCC+), dem Spannungsstabilisierungs-Stromversorgungsmodul (36) und dem Eingangshochspannungsschutzmodul (35) verbunden ist;
wobei das Relaismodul (33) ein Relais (RK3), eine sechste Diode (D6), eine siebte Diode (D7), einen ersten Transistor (Q1), einen siebten Widerstand (R7), einen vierundvierzigsten Widerstand (R44), einen zweiten Transistor (Q2) und einen vierten Widerstand (R4) umfasst; ein dritter Pin des Relais (RK3) mit dem positiven Stromversorgungsanschluss (VCC+) verbunden ist und ein vierter Pin des Relais (RK3) mit der sechsten Diode (D6) verbunden ist; der dritte Pin des Relais (RK3) mit der sechsten Diode (D6), der siebten Diode (D7) und einem zweiten Pin des ersten Transistors (Q1) in Reihe geschaltet ist; ein erster Pin des ersten Transistors (Q1) mit einem zweiten Pin des vierundvierzigsten Widerstands (R44) verbunden ist; ein dritter Pin des ersten Transistors (Q1) geerdet ist; ein erster Pin des siebten Widerstands (R7) mit dem dritten Pin des ersten Transistors (Q1) verbunden ist; ein zweiter Pin des siebten Widerstands (R7) mit einem zweiten Pin des zweiten Transistors (Q2) verbunden ist; ein erster Pin des zweiten Transistors (Q2) mit einem zweiten Pin des vierten Widerstands (R4) verbunden ist; ein erster Pin des vierten Widerstands (R4) und ein dritter Pin des zweiten Transistors (Q2) geerdet sind; ein zweiter Pin des Relais (RK3) als das Ausgangsanschluss des Relaismoduls (33) ausgebildet ist; und ein erster Pin des Relais (RK3) als das Eingangsanschluss des Relaismoduls (33) ausgebildet ist;
wobei das Spannungsstabilisierungs-Stromversorgungsmodul (36) eine erste Diode (D1), einen ersten Kondensator (C1), einen zweiten Kondensator (C2), einen Spannungsstabilisierungs-Chip mit drei Anschlüssen (U3), einen dritten Kondensator (C3), einen sechsten Kondensator (C6) und einen dritten Filterkondensator (CE3) umfasst; ein Ende der ersten Diode (D1) mit dem positiven Anschluss (EC5+) verbunden ist und das andere Ende der ersten Diode (D1) mit einem dritten Anschluss des Spannungsstabilisierungs-Chips mit drei Anschlüssen (U3) verbunden ist; der erste Kondensator (C1) und der zweite Kondensator (C2) parallel zwischen dem dritten Anschluss und einem zweiten Anschluss des Spannungsstabilisierungs-Chips mit drei Anschlüssen (U3) geschaltet sind; der dritte Kondensator (C3), sowohl der sechste Kondensator (C6) als auch der dritte Filterkondensator (CE3) parallel zwischen dem zweiten Anschluss und einem ersten Anschluss des Spannungsstabilisierungs-Chips mit drei Anschlüssen (U3) geschaltet sind; der zweite Anschluss des Spannungsstabilisierungs-Chips mit drei Anschlüssen (U3) geerdet ist; ein Ende des ersten Kondensators (C1) mit dem dritten Pin des Spannungsstabilisierungs-Chips mit drei Anschlüssen (U3) verbunden ist und das andere Ende des ersten Kondensators (C1) mit dem zweiten Pin des Spannungsstabilisierungs-Chips mit drei Anschlüssen (U3) verbunden ist; und der dritte Pin des Spannungsstabilisierungs-Chips mit drei Anschlüssen (U3) ferner mit einer Versorgungsspannung (VCC1) verbunden ist;
wobei das Eingangshochspannungsschutzmodul (35) eine erste Zenerdiode (ZD1), eine zweite Zenerdiode (ZD2), eine neunte Diode (D9), eine dreizehnte Diode (D13), einen dreizehnten Widerstand (R13) und einen einundzwanzigsten Widerstand (R21) umfasst; eine Anode der zweiten Zenerdiode (ZD2) in der angegebenen Reihenfolge mit der neunten Diode (D9), dem dreizehnten Widerstand (R13), dem einundzwanzigsten Widerstand (R21), der dreizehnten Diode (D13) und der ersten Zenerdiode (ZD1) in Reihe geschaltet ist; eine Kathode der zweiten Zenerdiode (ZD2) mit dem EC5-Eingangsmodul (31) verbunden ist; und das andere Ende der ersten Zenerdiode (ZD1) mit dem positiven Klemmenleitungs-Ausgangsanschluss (OUT+) verbunden ist;
wobei das Eingangsunterspannungsschutzmodul (37) eine fünfte Diode (D5), eine vierte Diode (D4), einen sechzehnten Widerstand (R16), ein Steuersignal (LV), einen Operationsverstärker (LM-358), einen vierten Kondensator (C4), einen fünfzehnten Widerstand (R15), einen achten Kondensator (C8), einen neunzehnten Kondensator (C19), einen zweiundzwanzigsten Kondensator (C22), einen dreizehnten Kondensator (C13), einen einundzwanzigsten Kondensator (C21), einen vierundzwanzigsten Widerstand (R24), eine elfte Diode (D11), eine Versorgungsspannung (VCC1), eine siebzehnte Diode (D17), einen sechsundzwanzigsten Widerstand (R26), einen fünften Transistor (Q5), einen dreiunddreißigsten Widerstand (R33), einen neunzehnten Widerstand (R19), einen elften Kondensator (C11), einen achten Widerstand (R8), einen neunten Widerstand (R9) und einen fünften Kondensator (C5) umfasst; der Operationsverstärker (LM-358) einen fünften Pin (Pin 8), einen zweiten Pin (Pin 5), einen dritten Pin (Pin 6), einen vierten Pin (Pin 7) und einen ersten Pin (Pin 4) umfasst; die fünfte Diode (D5), die vierte Diode (D4) und der sechzehnte Widerstand (R16) in der angegebenen Reihenfolge in Reihe geschaltet sind; der vierte Pin (Pin 7) des Operationsverstärkers (LM-358) mit dem Steuersignal (LV) verbunden ist; der vierte Pin (Pin 7) und der zweite Pin (Pin 5) des Operationsverstärkers (LM-358) jeweils parallel zu den beiden Enden der vierten Diode (D4) und des sechzehnten Widerstands (R16) geschaltet sind; der erste Pin (Pin 4) des Operationsverstärkers (LM-358) geerdet ist; der fünfte Pin (Pin 8) des Operationsverstärkers (LM-358) mit dem ersten Pin des Spannungsstabilisierungs-Chips mit drei Anschlüssen (U3) in dem Spannungsstabilisierungs-Stromversorgungsmodul (36) verbunden ist; der dritte Pin (Pin 6) des Operationsverstärkers (LM-358) in der angegebenen Reihenfolge mit dem vierundzwanzigsten Widerstand (R24), der elften Diode (D11) und der Versorgungsspannung (VCC1) in Reihe geschaltet ist; der fünfzehnte Widerstand (R15), der achte Kondensator (C8), der neunzehnte Kondensator (C19), der zweiundzwanzigste Kondensator (C22), der dreizehnte Kondensator (C13) und der einundzwanzigste Kondensator (C21) jeweils parallel zwischen dem achten Pin und dem dritten Pin des Operationsverstärkers (LM-358) geschaltet sind; der vierte Kondensator (C4) und der fünfzehnte Widerstand (R15) in Reihe geschaltet sind; der sechsundzwanzigste Widerstand (R26) in der angegebenen Reihenfolge mit der siebzehnten Diode (D17), einem zweiten Pin des fünften Transistors (Q5) und einem dritten Pin des fünften Transistors (Q5) in Reihe geschaltet ist und parallel zwischen dem dritten Pin des Operationsverstärkers (LM-358) und dem fünften Pin des Operationsverstärkers (LM-358) geschaltet ist; ein erster Pin des fünften Transistors (Q5) über den neunzehnten Widerstand (R19) und den elften Kondensator (C11) geerdet ist; die beiden Enden des dreiunddreißigsten Widerstands (R33) jeweils mit dem dritten Pin des fünften Transistors (Q5) bzw. einem ersten Pin des neunzehnten Widerstands (R19) verbunden sind; der fünfte Kondensator (C5) und der achte Widerstand (R8) in Reihe geschaltet sind und jeweils mit einem zweiten Ende des sechzehnten Widerstands (R16) bzw. dem ersten Pin des Spannungsstabilisierungs-Chips mit drei Anschlüssen (U3) in dem Spannungsstabilisierungs-Stromversorgungsmodul (36) verbunden sind; die beiden Enden des neunten Widerstands (R9) jeweils mit dem fünften Kondensator (C5) bzw. einem ersten Ende des achten Widerstands (R8) verbunden sind; und ein erstes Ende des neunten Widerstands (R9) mit dem fünften Kondensator (C5) verbunden und geerdet ist;
wobei das Hochtemperaturschutzmodul (38) ein Netz (OT), eine dritte Diode (D3), eine achte Diode (D8), einen Temperaturkomparator (U1-A), einen achtzehnten Widerstand (R18), einen zweiten NTC-Widerstand, einen zehnten Kondensator (C10), einen dritten Widerstand (R3), einen neunten Kondensator (C9), einen zehnten Widerstand (R10), einen vierzehnten Widerstand (R14) und eine Versorgungsspannung (VDD) umfasst; die dritte Diode (D3) mit einem ersten Pin des Temperaturkomparators (U1-A) verbunden ist; ein zweiter Pin des Temperaturkomparators (U1-A) über den dritten Widerstand (R3) mit dem ersten Pin des Spannungsstabilisierungs-Chips mit drei Anschlüssen (U3) in dem Spannungsstabilisierungs-Stromversorgungsmodul (36) verbunden ist; das Netz (OT) in der angegebenen Reihenfolge mit der achten Diode (D8) und einem zweiten Pin des achtzehnten Widerstands (R18) in Reihe geschaltet ist; das Netz (OT) und ein erster Pin des achtzehnten Widerstands (R18) jeweils mit der dritten Diode (D3) bzw. einem dritten Pin des Temperaturkomparators (U1-A) verbunden sind; ein zweiter Pin des zweiten NTC-Widerstands geerdet ist; ein erster Pin des zweiten NTC-Widerstands mit einem ersten Pin des dritten Widerstands (R3) verbunden ist; der zehnte Kondensator (C10) parallel zu den beiden Enden des zweiten NTC-Widerstands geschaltet ist; der dritte Pin des Temperaturkomparators (U1-A) mit dem vierzehnten Widerstand (R14) und der Versorgungsspannung (VDD) in Reihe geschaltet ist; ein zweiter Pin des zehnten Widerstands (R10) geerdet ist; ein erster Pin des zehnten Widerstands (R10) mit einem ersten Pin des vierzehnten Widerstands (R14) verbunden ist und ein zweiter Pin des zehnten Widerstands (R10) geerdet ist; und der neunte Kondensator (C9) parallel zu den beiden Enden des zehnten Widerstands (R10) geschaltet ist;
wobei das Zeitsteuerungsmodul (34) einen achtundzwanzigsten Widerstand (R28), einen vierunddreißigsten Widerstand (R34), einen siebten Transistor (Q7), einen dritten Transistor (Q3), einen fünfunddreißigsten Widerstand (R35) und einen sechsunddreißigsten Widerstand (R36) umfasst; ein zweiter Pin des dritten Transistors (Q3) mit einem ersten Pin des vierundvierzigsten Widerstands (R44) des Relaismoduls (33) und einem zweiten Pin des siebten Transistors (Q7) verbunden ist; ein erster Pin des dritten Transistors (Q3) mit einem zweiten Pin des sechsunddreißigsten Widerstands (R36) und einem ersten Pin des fünfunddreißigsten Widerstands (R35) verbunden ist; ein dritter Pin des dritten Transistors (Q3) geerdet ist; ein erster Pin des sechsunddreißigsten Widerstands (R36) mit einem Netz (VDD) verbunden ist; ein zweiter Pin des fünfunddreißigsten Widerstands (R35) geerdet ist; ein erster Pin des siebten Transistors (Q7) mit einem ersten Pin des achtundzwanzigsten Widerstands (R28) und einem zweiten Pin des vierunddreißigsten Widerstands (R34) verbunden ist; ein zweiter Pin des achtundzwanzigsten Widerstands (R28) mit dem zweiten Zeitgebermodul (42) verbunden ist; und ein erster Pin des vierunddreißigsten Widerstands (R34) mit einem dritten Pin des siebten Transistors (Q7) verbunden und geerdet ist;
wobei das erste Zeitgebermodul (41) ein Netz (PM), einen einunddreißigsten Widerstand (R31), eine achtzehnte Diode (D18), einen zweiten Chip (U2), ein Netz (V1), einen vierzehnten Kondensator (C14), einen sechzehnten Kondensator (C16), einen siebten Kondensator (C17), eine vierzehnte Diode (D14), eine fünfzehnte Diode (D15), einen dreißigsten Widerstand (R30), einen zweiunddreißigsten Widerstand (R32), einen neunundzwanzigsten Widerstand (R29), einen Kondensator C24, einen Transistor Q4, einen zweiten Widerstand (R2), einen achtunddreißigsten Widerstand (R38) und einen achten Metalloxid-Halbleiter-Transistor (MOS-Transistor) (Q8) umfasst; ein erster Pin des einunddreißigsten Widerstands (R31) mit dem ersten Pin des vierundvierzigsten Widerstands (R44) des Relaismoduls (33) und dem Netz (PM) verbunden ist; ein zweiter Pin des einunddreißigsten Widerstands (R31) mit einem dritten Pin des zweiten Chips (U2) verbunden ist; die achtzehnte Diode (D18) parallel zu dem einunddreißigsten Widerstand (R31) geschaltet ist; ein fünfter Pin des zweiten Chips (U2) über den vierzehnten Kondensator (C14) geerdet ist; ein zweiter Pin des zweiten Chips (U2) mit einem sechsten Pin des zweiten Chips (U2), einem Ende des siebten Kondensators (C17), einem Ende der vierzehnten Diode (D14) und einem Ende der fünfzehnten Diode (D15) verbunden ist; das andere Ende des siebten Kondensators (C17) geerdet ist; das andere Ende der fünfzehnten Diode (D15) mit einem zweiten Pin des dreißigsten Widerstands (R30) verbunden ist; ein erster Pin des dreißigsten Widerstands (R30) mit einem zweiten Pin des zweiunddreißigsten Widerstands (R32) verbunden ist; ein erster Pin des zweiunddreißigsten Widerstands (R32) mit einem Ende des sechzehnten Kondensators (C16), einem vierten Pin des zweiten Chips (U2), einem achten Pin des zweiten Chips (U2) und einem dritten Pin des achten MOS-Transistors (Q8) verbunden ist; ein erster Pin des zweiten Chips (U2) mit dem anderen Ende des sechzehnten Kondensators (C16) verbunden ist und das andere Ende des sechzehnten Kondensators (C16) geerdet ist; ein siebter Pin des zweiten Chips (U2) mit dem anderen Ende der vierzehnten Diode (D14), dem ersten Pin des dreißigsten Widerstands (R30) und dem zweiten Pin des zweiunddreißigsten Widerstands (R32) verbunden ist; ein erster Pin des achten MOS-Transistors (Q8) mit einem zweiten Pin des vierten Transistors (Q4) und einem zweiten Pin des achtunddreißigsten Widerstands (R38) verbunden ist; ein erster Pin des achtunddreißigsten Widerstands (R38) mit einem zweiten Pin des achten MOS-Transistors (Q8) und dem Netz (VDD) verbunden ist; ein dritter Pin (Pin 3) des vierten Transistors (Q4) geerdet ist; ein erster Pin des neunundzwanzigsten Widerstands (R29) mit einem ersten Pin des vierten Transistors (Q4) verbunden ist und ein zweiter Pin des neunundzwanzigsten Widerstands (R29) geerdet ist; und ein zweiter Pin des zweiten Widerstands (R2) mit einem Ende der sechzehnten Diode (D16) verbunden ist;
wobei die Sicherheitssteuerschaltung **dadurch gekennzeichnet ist, dass**
die Sicherheitssteuerschaltung ferner ein Niedertemperaturschutzmodul (39) umfasst, wobei das Niedertemperaturschutzmodul (39) einen elften Widerstand (R11), eine dritte Zenerdiode (ZD3), einen zwanzigsten Widerstand (R20), einen Optokoppler (PC3), ein Netz (NTC), einen vierten Transistor (U4), einen siebten Kondensator (C7) und einen fünfundvierzigsten Widerstand (R45) umfasst; ein zweiter Pin der dritten Zenerdiode (ZD3) mit dem anderen Ende der sechzehnten Diode (D16) des ersten Zeitgebermoduls (41) verbunden ist; ein erster Pin der dritten Zenerdiode (ZD3) mit dem positiven Klemmenleitungs-Ausgangsanschluss (OUT+) und einem ersten Pin des zwanzigsten Widerstands (R20) verbunden ist; ein zweiter Pin des zwanzigsten Widerstands (R20) mit einem zweiten Pin des Optokopplers (PC3) verbunden ist; ein dritter Pin des Optokopplers (PC3) geerdet ist; ein vierter Pin des Optokopplers (PC3) mit einem Netz (NTC) verbunden ist; ein erster Pin des Optokopplers (PC3) mit dem negativen Klemmenleitungs-Ausgangsanschluss (OUT-) verbunden ist; ein zweiter Pin des elften Widerstands (R11) mit dem ersten Pin des vierten Widerstands (R4) des Relaismoduls (33) verbunden ist; ein erster Pin des elften Widerstands (R11) geerdet ist; ein erster Pin des vierten Transistors (U4) mit einem zweiten Pin des fünfundvierzigsten Widerstands (R45) verbunden ist, ein zweiter Pin des vierten Transistors (U4) sowohl mit einem ersten Pin des fünfundvierzigsten Widerstands (R45) als auch mit einem zweiten Pin eines dritten NTC-Widerstands (NTC110K) verbunden ist und ein dritter Pin des vierten Transistors (U4) mit dem Netz (NTC) verbunden ist; der siebte Kondensator (C7) parallel zu den beiden Enden des fünfundvierzigsten Widerstands (R45) geschaltet ist; und ein erster Pin des dritten NTC-Widerstands (NTC110K) mit dem ersten Pin des Spannungsstabilisierungs-Chips mit drei Anschlüssen (U3) des Spannungsstabilisierungs-Stromversorgungsmoduls (36) verbunden ist;
wobei das zweite Zeitgebermodul (42) einen fünften Kondensator (C15), einen zweiundzwanzigsten Widerstand (R22), einen dreiundzwanzigsten Widerstand (R23), einen zweiunddreißigsten Transistor (Q32), einen einundvierzigsten Widerstand (R41), ein Netz (V1), eine zehnte Diode (D10), einen ersten Filterkondensator (CE1), einen siebenunddreißigsten Widerstand (R37) und einen sechsten Transistor (Q6) umfasst; ein dritter Pin des zweiunddreißigsten Transistors (Q32) mit einem ersten Pin des einundvierzigsten Widerstands (R41) und einem zweiten Pin des zweiundzwanzigsten Widerstands (R22) verbunden ist; ein zweiter Pin des einundvierzigsten Widerstands (R41) mit dem Netz (V1) verbunden ist; ein erster Pin des zweiundzwanzigsten Widerstands (R22) mit einem ersten Pin des dreiundzwanzigsten Widerstands (R23) und einem Ende des fünften Kondensators (C15) verbunden ist; das andere Ende des fünften Kondensators (C15) geerdet ist; ein erster Pin des zweiunddreißigsten Transistors (Q32) mit einem zweiten Pin des dreiundzwanzigsten Widerstands (R23) verbunden ist; ein zweiter Pin des zweiunddreißigsten Transistors (Q32) mit einem Ende der zehnten Diode (D10) verbunden ist; das andere Ende der zehnten Diode (D10) mit einem ersten Pin des ersten Filterkondensators (CE1) und einem ersten Pin des siebenunddreißigsten Widerstands (R37) verbunden ist; ein zweiter Pin des ersten Filterkondensators (CE1) geerdet ist; ein zweiter Pin des siebenunddreißigsten Widerstands (R37) mit einem ersten Pin des sechsten Transistors (Q6) verbunden ist; ein dritter Pin des sechsten Transistors (Q6) geerdet ist; und ein zweiter Pin des sechsten Transistors (Q6) mit dem ersten Pin des dritten Transistors (Q3) des Zeitsteuerungsmoduls (34) verbunden ist;
wobei das Fehleralarmmodul (391) einen siebzehnten Widerstand (R17), einen zehnten Transistor (Q10), eine zweite Diode (D2), einen fünften Widerstand (R5) und einen Summer (BZ2) umfasst; ein erster Pin des siebzehnten Widerstands (R17) mit dem ersten Pin des vierten Widerstands (R4) des Relaismoduls (33) verbunden ist; ein zweiter Pin des siebzehnten Widerstands (R17) mit einem ersten Pin des zehnten Transistors (Q10) verbunden ist; ein dritter Pin des zehnten Transistors (Q10) geerdet ist; ein zweiter Pin des zehnten Transistors (Q10) mit einem zweiten Pin des Summers (BZ2) verbunden ist; die beiden Enden der zweiten Diode (D2) jeweils mit einem ersten Pin bzw. dem zweiten Pin des Summers (BZ2) verbunden sind; ein zweiter Pin des fünften Widerstands (R5) mit dem ersten Pin des Summers (BZ2) verbunden ist; und ein erster Pin des fünften Widerstands (R5) mit einem Netz (VDD) verbunden ist;
wobei das Leuchtanzeigemodul (43) einen zweiundvierzigsten Widerstand (R42), einen dreizehnten Transistor (Q13), einen fünfundzwanzigsten Kondensator (C25), einen vierzehnten Transistor (Q14), einen dreiundvierzigsten Widerstand (R43), einen sechsten Widerstand (R6), einen elften Transistor (Q11), einen zwölften Widerstand (R12), eine erste Leuchtdiode (LED3), einen achtzehnten Kondensator (C18), einen siebenundzwanzigsten Widerstand (R27), einen zwölften Transistor (Q12), einen ersten Widerstand (R1), einen dreiundzwanzigsten Kondensator (C23) und eine zweite Leuchtdiode (LED1) umfasst; ein erster Pin des zweiundvierzigsten Widerstands (R42) mit einem ersten Pin des vierten Widerstands (R4) verbunden ist; ein zweiter Pin des zweiundvierzigsten Widerstands (R42) mit einem ersten Pin des dreizehnten Transistors (Q13) verbunden ist; ein dritter Pin des dreizehnten Transistors (Q13) geerdet ist; ein zweiter Pin des dreizehnten Transistors (Q13) mit einem ersten Pin des zwölften Transistors (Q12), einem zweiten Pin des siebenundzwanzigsten Widerstands (R27) und einem Ende des achtzehnten Kondensators (C18) verbunden ist; ein dritter Pin des zwölften Transistors (Q12) mit einem dritten Pin des elften Transistors (Q11) verbunden und geerdet ist; ein zweiter Pin des zwölften Transistors (Q12) mit einem zweiten Pin des ersten Widerstands (R1) und einem Ende des dreiundzwanzigsten Kondensators (C23) verbunden ist; das andere Ende des dreiundzwanzigsten Kondensators (C23) mit einem zweiten Pin des vierzehnten Transistors (Q14), einem ersten Pin des elften Transistors (Q11) und einem zweiten Pin des sechsten Widerstands (R6) verbunden ist; ein zweiter Pin des elften Transistors (Q11) mit dem anderen Ende des achtzehnten Kondensators (C18) und einem ersten Pin des zwölften Widerstands (R12) verbunden ist; ein zweiter Pin des zwölften Widerstands (R12) mit einem Ende der ersten Leuchtdiode (LED3) verbunden ist; ein erster Pin des ersten Widerstands (R1) mit einem Ende der zweiten Leuchtdiode (LED1) verbunden ist; ein erster Pin des sechsten Widerstands (R6) mit einer Stromversorgung (VDD) verbunden ist und mit dem anderen Ende der ersten Leuchtdiode (LED3), einem ersten Pin des siebenundzwanzigsten Widerstands (R27) und dem anderen Ende der zweiten Leuchtdiode (LED1) verbunden ist; ein dritter Pin des vierzehnten Transistors (Q14) geerdet und mit einem Ende des fünfundzwanzigsten Kondensators (C25) verbunden ist; das andere Ende des fünfundzwanzigsten Kondensators (C25) mit einem ersten Pin des vierzehnten Transistors (Q14) und einem zweiten Pin des dreiundvierzigsten Widerstands (R43) verbunden ist; und ein erster Pin des dreiundvierzigsten Widerstands (R43) mit einem Netz (PM) verbunden ist;
wobei die Sicherheitssteuerschaltung ferner ein Modul zur Erfassung einer angeschlossenen Last (44) umfasst, wobei ein Erfassungsanschluss des Moduls zur Erfassung einer angeschlossenen Last (44) dazu verwendet wird, ein Spannungssignal eines Lastanschlusses zu erfassen; und ein Signalausgang des Moduls zur Erfassung einer angeschlossenen Last (44) mit einem Signaleingang des ersten Zeitgebermoduls (41) gekoppelt ist.

2. Sicherheitssteuerschaltung nach Anspruch 1, wobei
das Modul zur Erfassung einer angeschlossenen Last (44) einen Komparator (U1-D), eine zweiundzwanzigste Diode (D22), eine fünfundzwanzigste Diode (D25), einen einundfünfzigsten Widerstand (R51), einen zweiundfünfzigsten Widerstand (R52), einen dreiundfünfzigsten Widerstand (R53), einen vierundfünfzigsten Widerstand (R54), einen fünfundfünfzigsten Widerstand (R55), einen zwanzigsten Kondensator (C20), einen zwölften Kondensator (C12) und einen Spannungsregler (ZD2) umfasst; ein zweiter Pin (Pin 13) des Komparators (U1-D) mit einer Anode der fünfundzwanzigsten Diode (D25), einem zweiten Pin des zweiundfünfzigsten Widerstands (R52), einem zweiten Pin des fünfundfünfzigsten Widerstands (R55) und einem Ende des zwanzigsten Kondensators (C20) verbunden ist;
eine Kathode der fünfundzwanzigsten Diode (D25) mit dem Lastanschluss verbunden ist; ein erster Pin des zweiundfünfzigsten Widerstands (R52) mit dem Netz (VDD) verbunden ist; und das andere Ende des zwanzigsten Kondensators (C20) und ein erster Pin des fünfundfünfzigsten Widerstands (R55) geerdet sind;
ein erster Pin (Pin 12) des Komparators (U1-D) mit einem ersten Pin des einundfünfzigsten Widerstands (R51), einem zweiten Pin des dreiundfünfzigsten Widerstands (R53), einem ersten Pin des vierundfünfzigsten Widerstands (R54), einem ersten Pin des Spannungsreglers (ZD2) und einem Ende des zwölften Kondensators (C12) verbunden ist;
ein zweiter Pin des einundfünfzigsten Widerstands (R51) mit einer Kathode der zweiundzwanzigsten Diode (D22) verbunden ist und eine Anode der zweiundzwanzigsten Diode (D22) mit dem Lastanschluss verbunden ist;
ein zweiter Pin des vierundfünfzigsten Widerstands (R54) mit einem 2,5-V-Stromversorgungsanschluss verbunden ist;
ein erster Pin des dreiundfünfzigsten Widerstands (R53), das andere Ende des zwölften Kondensators (C12) und ein zweiter Pin des Spannungsreglers (ZD2) geerdet sind; und
ein dritter Pin (Pin 14) des Komparators (U1-D) mit einer Anode einer vierundzwanzigsten Diode (D24) verbunden ist und eine Kathode der vierundzwanzigsten Diode (D24) mit dem zweiten Pin des zweiten Widerstands (R2) des ersten Zeitgebermoduls (41) verbunden ist.

3. Sicherheitssteuerschaltung nach Anspruch 1,
ferner umfassend ein Kurzschlusserfassungsmodul (45), wobei ein Erfassungsanschluss des Kurzschlusserfassungsmoduls (45) dazu verwendet wird, während des Lastbetriebs ein Stromsignal zu erfassen; und ein Signalausgang des Kurzschlusserfassungsmoduls (45) mit einem Signaleingang des ersten Zeitgebermoduls (41) gekoppelt ist.

4. Sicherheitssteuerschaltung nach Anspruch 3, wobei
das Kurzschlusserfassungsmodul (45) einen Komparator (U1-C), eine siebenundzwanzigste Diode (D27), eine achtundzwanzigste Diode (D28), eine neunundzwanzigste Diode (D29), einen sechsundvierzigsten Widerstand (R46), einen siebenundvierzigsten Widerstand (R47), einen achtundvierzigsten Widerstand (R48), einen neunundvierzigsten Widerstand (R49), einen sechsundfünfzigsten Widerstand (R56), einen siebenundfünfzigsten Widerstand (R57), einen achtundfünfzigsten Widerstand (R58), einen neunundfünfzigsten Widerstand (R59), einen sechsten Transistor (Q16), einen sechsundzwanzigsten Kondensator (C26), einen siebenundzwanzigsten Kondensator (C27), einen achtundzwanzigsten Kondensator (C28), einen Chip (U4) und eine sechsundzwanzigste Diode (D26) umfasst;
ein erster Pin (Pin 10) des Komparators (U1-C) mit einer Anode der siebenundzwanzigsten Diode (D27), einem zweiten Pin des siebenundvierzigsten Widerstands (R47), einem zweiten Pin des achtundvierzigsten Widerstands (R48) und einem Ende des achtundzwanzigsten Kondensators (C28) verbunden ist; und eine Kathode der siebenundzwanzigsten Diode (D27) und eine Kathode der achtundzwanzigsten Diode (D28) mit dem Lastanschluss verbunden sind;
ein erster Pin des siebenundvierzigsten Widerstands (R47) und ein zweiter Pin des neunundvierzigsten Widerstands (R49) mit dem Netz (VDD) verbunden sind; und ein erster Pin des achtundvierzigsten Widerstands (R48) und das andere Ende des achtundzwanzigsten Kondensators (C28) geerdet sind;
ein zweiter Pin (Pin 9) des Komparators (U1-C) mit einem ersten Pin des siebenundfünfzigsten Widerstands (R57), einem ersten Pin des achtundfünfzigsten Widerstands (R58) und einem Ende des siebenundzwanzigsten Kondensators (C27) verbunden ist; das andere Ende des siebenundzwanzigsten Kondensators (C27) geerdet ist; ein zweiter Pin des siebenundfünfzigsten Widerstands (R57) und eine Anode der achtundzwanzigsten Diode (D28) geerdet sind; und ein zweiter Pin des achtundfünfzigsten Widerstands (R58) mit dem 2,5-V-Stromversorgungsanschluss verbunden ist;
ein dritter Pin (Pin 8) des Komparators (U1-C) mit einem ersten Pin des neunundvierzigsten Widerstands (R49), einem zweiten Pin des neunundfünfzigsten Widerstands (R59) und einer Kathode der neunundzwanzigsten Diode (D29) verbunden ist; und eine Anode der neunundzwanzigsten Diode (D29) mit einem Signalanschluss BTV verbunden ist;
ein erster Pin des sechsundvierzigsten Widerstands (R46) und ein erster Pin des neunundfünfzigsten Widerstands (R59) mit einem ersten Pin des sechzehnten Transistors (Q16) verbunden sind; ein dritter Pin des sechzehnten Transistors (Q16) und ein zweiter Pin des sechsundvierzigsten Widerstands (R46) mit einem Netz (VDD) verbunden sind; ein zweiter Pin des sechzehnten Transistors (Q16) mit einem sechsten Pin (Pin 6) des vierten Chips (U4) und einem ersten Pin des sechsundfünfzigsten Widerstands (R56) verbunden ist; ein zweiter Pin des sechsundfünfzigsten Widerstands (R56) mit Pin 2 des Tastschalters K1 verbunden ist; und Pin 1 des Tastschalters K1 geerdet ist;
ein fünfter Pin (Pin 5) des vierten Chips (U4) und ein Ende des sechsundzwanzigsten Kondensators (C26) mit dem Netz (VDD) verbunden sind; ein zweiter Pin des vierten Chips (U4) und das andere Ende des sechsundzwanzigsten Kondensators (C26) geerdet sind; und
ein erster Pin des vierten Chips (U4) über die sechsundzwanzigste Diode (D26) mit dem zweiten Pin des zweiten Widerstands (R2) verbunden ist; und ein dritter Pin und ein vierter Pin des vierten Chips (U4) unbeschaltet sind.

5. Notstartklemme für ein Kraftfahrzeug, umfassend eine Anodenkabelklemme (1), die mit einem Eingangsanschluss (OUT+) versehen ist; eine Kathodenkabelklemme (2), die mit einem Ausgangsanschluss (OUT-) versehen ist; und einen Steuerkasten (30), wobei der Steuerkasten (30) eine obere Gehäuseschale (301) des Steuerkastens, eine untere Gehäuseschale (302) des Steuerkastens, eine Ein-/Aus-Taste (303) und die Sicherheitssteuerschaltung nach einem der Ansprüche 1 bis 4 umfasst.

6. Notstartklemme für ein Kraftfahrzeug nach Anspruch 5, wobei die obere Gehäuseschale (301) des Steuerkastens und die untere Gehäuseschale (302) des Steuerkastens übereinander angeordnet und fest miteinander verbunden sind; die Sicherheitssteuerschaltung zwischen der oberen Gehäuseschale (301) des Steuerkastens und der unteren Gehäuseschale (302) des Steuerkastens angeordnet ist; und die Ein-/Aus-Taste (303) an einer Seite der oberen Gehäuseschale (301) des Steuerkastens angeordnet ist und mit dem Tastschalter (K1) der Sicherheitssteuerschaltung in Kontakt steht.

## Revendications

1. Circuit de contrôle de sécurité, comprenant un module d'entrée EC5 (31), un module de clip d'allumage (32), un module de relais (33), un module de contrôle de temps (34), un module de protection à haute tension d'entrée (35), un module d'alimentation stabilisée en tension (36), un module de protection à basse tension d'entrée (37), un module de protection à haute température (38), un module d'alarme d'erreur (391), un premier module de temporisation (41), un deuxième module de temporisation (42) et un module d'affichage lumineux (43) ;
dans lequel le module d'entrée ECS (31) comprend une borne positive (EC5+) et une borne négative (EC5-) ;
le module de clip d'allumage (32) comprend une borne de sortie positive de fil de clip (OUT+), une borne de sortie négative de fil de clip (OUT-), une douzième diode (D12) et une neuvième diode (D19) ; la borne de fil de clip (OUT+) est connectée à un premier fil (321) ; le premier fil (321) est connecté à la borne de sortie positive de fil de clip (OUT+) et est connecté à une extrémité de la neuvième diode (D19) et à une extrémité de sortie du module de relais (33), une extrémité d'entrée du module de relais (33) est connectée à un deuxième fil (322) ; l'autre extrémité du deuxième fil (322) est connectée à la borne positive (EC5+) ; l'autre extrémité de la neuvième diode (D19) est connectée à un résistor à coefficient de température négative, NTC ; la borne de sortie négative de fil de clip (OUT-) est connectée à un troisième fil (323) ; le troisième fil (323) est connecté à la borne de sortie négative de fil de clip (OUT-) et est connecté à une extrémité de la douzième diode (D12), l'autre extrémité de la douzième diode (D12) est mise à la terre ; l'autre extrémité du troisième fil (323) est connectée à la borne négative (EC5-) ;
la borne positive (EC5+) est également connectée à une borne d'alimentation positive (VCC+), au module d'alimentation stabilisée en tension (36) et au module de protection à haute tension d'entrée (35) ;
le module de relais (33) comprend un relais (RK3), une sixième diode (D6), une septième diode (D7), une première triode (Q1), un septième résistor (R7), un quarante-quatrième résistor (R44), une deuxième triode (Q2) et un quatrième résistor (R4) ; une troisième broche du relais (RK3) est connectée à la borne d'alimentation positive (VCC+) et une quatrième broche du relais (RK3) est connectée à la sixième diode (D6), la troisième broche du relais (RK3) est connectée en série à la sixième diode (D6), à la septième diode (D7) et à la deuxième broche de la première triode (Q1), une première broche de la première triode (Q1) est connectée à une deuxième broche du quarante-quatrième résistor (R44) ; une troisième broche de la première triode (Q1) est mise à la terre ; une première broche du septième résistor (R7) est connectée à la troisième broche de la première triode (Q1) ; une deuxième broche du septième résistor (R7) est connectée à une deuxième broche de la deuxième triode (Q2), une première broche de la deuxième triode (Q2) est connectée à une deuxième broche du quatrième résistor (R4) ; une première broche du quatrième résistor (R4) et une troisième broche de la deuxième triode (Q2) sont mises à la terre ; une deuxième broche du relais (RK3) est définie comme extrémité de sortie du module de relais (33) ; une première broche du relais (RK3) est définie comme extrémité d'entrée du module de relais (33) ;
le module d'alimentation stabilisée en tension (36) comprend une première diode (D1), un premier condensateur (C1), un deuxième condensateur (C2), une puce stabilisatrice de tension à tri-broche (U3), un troisième condensateur (C3), un sixième condensateur (C6) et un troisième condensateur de filtrage (CE3) ; une extrémité de la première diode (D1) est connectée à la borne positive (EC5+), et l'autre extrémité de la première diode (D1) est connectée à une troisième broche de la puce stabilisatrice de tension à tri-broche (U3) ; le premier condensateur (C1) et le deuxième condensateur (C2) sont connectés en parallèle à la troisième broche et à une deuxième broche de la puce stabilisatrice de tension à tri-broche (U3) ; le troisième condensateur (C3) ainsi que le sixième condensateur (C6) et le troisième condensateur de filtrage (CE3) sont connectés en parallèle à la deuxième broche et à une première broche de la puce stabilisatrice de tension à tri-broche (U3) ; la deuxième broche de la puce stabilisatrice de tension à tri-broche (U3) est mise à la terre ; une extrémité du premier condensateur (C1) est connectée à la troisième broche de la puce stabilisatrice de tension à tri-broche (U3), et l'autre extrémité du premier condensateur (C1) est connectée à la deuxième broche de la puce stabilisatrice de tension à tri-broche (U3) ; la troisième broche de la puce stabilisatrice de tension à tri-broche (U3) est également connectée à une tension d'alimentation (VCC1) ;
le module de protection à haute tension d'entrée (35) comprend une première diode Zener (ZD1), une deuxième diode Zener (ZD2), une neuvième diode (D9), une treizième diode (D13), une treizième résistor (R13) et une vingt-et-unième résistor (R21) ; une anode de la deuxième diode Zener (ZD2) est connectée en série à la neuvième diode (D9), au treizième résistor (R13), au vingt-et-unième résistor (R21), à la treizième diode (D13) et à la première diode Zener (ZD1) en séquence, une cathode de la deuxième diode Zener (ZD2) est connectée au module d'entrée EC5 (31) et l'autre extrémité de la première diode Zener (ZD1) est connectée à la borne de sortie positive de fil de clip (OUT+) ;
le module de protection à basse tension d'entrée (37) comprend une cinquième diode (D5), une quatrième diode (D4), un seizième résistor (R16), un signal de contrôle (LV), un amplificateur opérationnel (LM-358), un quatrième condensateur (C4), un quinzième résistor (R15), un huitième condensateur (C8), un dix-neuvième condensateur (C19), un vingt-deuxième condensateur (C22), un treizième condensateur (C13), un vingt-et-unième condensateur (C21), un vingt-quatrième résistor (R24), une onzième diode (D11), une tension d'alimentation (VCC1), une dix-septième diode (D17), un vingt-sixième résistor (R26), une cinquième triode (Q5), un trente-troisième résistor (R33), un dix-neuvième résistor (R19), un onzième condensateur (C11), un huitième résistor (R8), un neuvième résistor (R9) et un cinquième condensateur (C5) ; l'amplificateur opérationnel (LM-358) comprend une cinquième broche (8), une deuxième broche (5), une troisième broche (6), une quatrième broche (7) et une première broche (4) ; la cinquième diode (D5), la quatrième diode (D4) et le seizième résistor (R16) sont connectés en série en séquence ; la quatrième broche (7) de l'amplificateur opérationnel (LM-358) est connectée au signal de contrôle (LV) ; la quatrième broche (7) et la deuxième broche (5) de l'amplificateur opérationnel (LM-358) sont respectivement connectées en parallèle à deux extrémités de la quatrième diode (D4) et du seizième résistor (R16) ; la première broche (4) de l'amplificateur opérationnel (LM-358) est mise à la terre ; la cinquième broche (8) de l'amplificateur opérationnel (LM-358) est connectée à la première broche de la puce stabilisatrice de tension à trois bornes (U3) dans le module d'alimentation stabilisée en tension (36) ; la troisième broche (6) de l'amplificateur opérationnel (LM-358) est connectée en série au vingt-quatrième résistor (R24), à la onzième diode (D11) et à la tension d'alimentation (VCC1) en séquence ; le quinzième résistor (R15), le huitième condensateur (C8), le dix-neuvième condensateur (C19), le vingt-deuxième condensateur (C22), le treizième condensateur (C13) et le vingt-et-unième condensateur (C21) sont tous connectés en parallèle à la huitième broche et à la troisième broche de l'amplificateur opérationnel (LM-358) ; le quatrième condensateur (C4) et le quinzième résistor (R15) sont connectés en série ; le vingt-sixième résistor (R26) est connecté en série à la dix-septième diode (D17), à une deuxième broche de la cinquième triode (Q5) et à une troisième broche de la cinquième triode (Q5) en séquence, et est connecté en parallèle à la troisième broche de l'amplificateur opérationnel (LM-358) et à la cinquième broche de l'amplificateur opérationnel (LM-358) ; une première broche de la cinquième triode (Q5) est mise à la terre via le dix-neuvième résistor (R19) et le onzième condensateur (C11) ; deux extrémités du trente-troisième résistor (R33) sont respectivement connectées en parallèle à la troisième broche de la cinquième triode (Q5) et à une première broche de la dix-neuvième résistor (R19) ; le cinquième condensateur (C5) et le huitième résistor (R8) sont connectés en série et sont respectivement connectés à une deuxième extrémité du seizième résistor (R16) et à la première broche de la puce stabilisatrice de tension à tri-broche (U3) dans le module d'alimentation stabilisée en tension (36) ; deux extrémités du neuvième résistor (R9) sont respectivement connectées au cinquième condensateur (C5) et à une première extrémité du huitième résistor (R8) ; une première extrémité du neuvième résistor (R9) est connectée au cinquième condensateur (C5) et est mise à la terre, le module de protection à haute température (38) comprend un réseau (OT), une troisième diode (D3), une huitième diode (D8), un comparateur de température (U1-A), un dix-huitième résistor (R18), un deuxième résistor NTC, un dixième condensateur (C10), un troisième résistor (R3), un neuvième condensateur (C9), un dixième de résistor (R10), un quatorzième de résistor (R14) et une tension d'alimentation (VDD) ; la troisième diode (D3) est connectée à une première broche du comparateur de température (U1-A) ; une deuxième broche du comparateur de température (U1-A) est connectée à la première broche de la puce stabilisatrice de tension à tri-broche (U3) dans le module d'alimentation stabilisée en tension (36) via le troisième résistor (R3) ; le réseau (OT) est connecté en série à la huitième diode (D8) et à une deuxième broche du dix-huitième résistor (R18) en séquence ; le réseau (OT) et une première broche du dix-huitième résistor (R18) sont respectivement connectés à la troisième diode (D3) et à une troisième broche du comparateur de température (U1-A) ; une deuxième broche du deuxième résistor NTC est mise à la terre ; une première broche du deuxième résistor NTC est connectée à une première broche du troisième résistor (R3) ; le dixième condensateur (C10) est connecté en parallèle à deux extrémités du deuxième résistor NTC ; la troisième broche du comparateur de température (U1-A) est connectée en série au quatorzième résistor (R14) et à la tension d'alimentation (VDD) ; une deuxième broche du dixième résistor (R10) est mise à la terre ; une première broche du dixième résistor (R10) est connectée à une première broche du quatorzième résistor (R14) et une deuxième broche du dixième résistor (R10) est mise à la terre ; le neuvième condensateur (C9) est connecté en parallèle à deux extrémités du dixième résistor (R10) ;
le module de contrôle de temporisation (34) comprend un vingt-huitième résistor (R28), un trente-quatrième résistor (R34), une septième triode (Q7), une troisième triode (Q3), un trente-cinquième résistor (R35) et un trente-sixième résistor (R36) ; une deuxième broche de la troisième triode (Q3) est connectée à une première broche du quarante-quatrième résistor (R44) du module de relais (33) et à une deuxième broche de la septième triode (Q7) ; une première broche de la troisième triode (Q3) est connectée à une deuxième broche du trente-sixième résistor (R36) et à une première broche du trente-cinquième résistor (R35) ; une troisième broche de la troisième triode (Q3) est mise à la terre ; une première broche du trente-sixième résistor (R36) est connectée à un réseau (VDD) ; une deuxième broche du trente-cinquième résistor (R35) est mise à la terre ; une première broche de la septième triode (Q7) est connectée à une première broche du vingt-huitième résistor (R28) et à une deuxième broche du trente-quatrième résistor (R34) ; une deuxième broche du vingt-huitième résistor (R28) est connectée au deuxième module de temporisation (42) ; une première broche du trente-quatrième résistor (R34) est connectée à une troisième broche de la septième triode (Q7) et est mise à la terre ;
le premier module de temporisation (41) comprend un réseau (PM), un trente-et-unième résistor (R31), une dix-huitième diode (D18), une deuxième puce (U2), un réseau (V1), un quatorzième condensateur (C14), un seizième condensateur (C16), un septième condensateur (C17), une quatorzième diode (D14), une quinzième diode (D15), un trentième résistor (R30), un trente-deuxième résistor (R32), un vingt-neuvième résistor (R29), un condensateur (C24), une triode (Q4), un deuxième résistor (R2), un trente-huitième résistor (R38), un huitième transistor semi-conducteur à oxyde métallique, MOS, (Q8), une première broche du trente-et-unième résistor (R31) est connectée à la première broche du quarante-quatrième résistor (R44) du module de relais (33) et au réseau (PM) ; une deuxième broche du trente-et-unième résistor (R31) est connectée à une troisième broche de la deuxième puce (U2) ; la dix-huitième diode (D18) est connectée en parallèle au trente-et-unième résistor (R31) ; une cinquième broche de la deuxième puce (U2) est mise à la terre via le quatorzième condensateur (C14) ; une deuxième broche de la deuxième puce (U2) est simultanément connectée à une sixième broche de la deuxième puce (U2), à une extrémité du septième condensateur (C17), à une extrémité de la quatorzième diode (D14) et à une extrémité de la quinzième diode (D15) ; l'autre extrémité du septième condensateur (C17) est mise à la terre ; l'autre extrémité de la quinzième diode (D15) est connectée à une deuxième broche du trentième résistor (R30) ; une première broche du trentième résistor (R30) est connectée à une deuxième broche du trente-deuxième résistor (R32) ; une première broche du trente-deuxième résistor (R32) est simultanément connectée à une extrémité du seizième condensateur (C16), à une quatrième broche de la deuxième puce (U2), à une huitième broche de la deuxième puce (U2) et à une troisième broche du huitième transistor MOS (Q8) ; une première broche de la deuxième puce (U2) est connectée à l'autre extrémité du seizième condensateur (C16) et l'autre extrémité du seizième condensateur (C16) est mise à la terre ; une septième broche de la deuxième puce (U2) est simultanément connectée à l'autre extrémité de la quatorzième diode (D14), à la première broche du trentième résistor (R30) et à la deuxième broche du trente-deuxième résistor (R32) ; une première broche du huitième transistor MOS (Q8) est simultanément connectée à une deuxième broche de la triode (Q4) et à une deuxième broche du trente-huitième résistor (R38) ; une première broche du trente-huitième résistor (R38) est connectée à une deuxième broche du huitième transistor MOS (Q8) et au réseau VDD ; une troisième broche de la broche 3 de la quatrième triode (Q4) est mise à la terre ; une première broche du vingt-neuvième résistor (R29) est connectée à une première broche de la quatrième triode (Q4) et une deuxième broche du vingt-neuvième résistor (R29) est mise à la terre ; une deuxième broche du deuxième résistor (R2) est connectée à une extrémité de la seizième diode (D16) ;
le circuit de contrôle de sécurité se **caractérise en ce que**,
le circuit de contrôle de sécurité comprend en outre un module de protection à basse température (39), le module de protection à basse température (39) comprend un onzième résistor (R11), une troisième diode Zener (ZD3), un vingtième résistor (R20), un coupleur photoélectrique (PC3), un réseau (NTC), une quatrième triode (U4), un septième condensateur (C7) et un quarante-cinquième résistor (R45) ; une deuxième broche de la troisième diode Zener (ZD3) est connectée à l'autre extrémité de la seizième diode (D16) du premier module de temporisation (41) ; une première broche de la troisième diode Zener (ZD3) est simultanément connectée à la borne de sortie positive de fil de clip (OUT+) et à une première broche du vingtième résistor (R20) ; une deuxième broche du vingtième résistor (R20) est connectée à une deuxième broche du coupleur photoélectrique (PC3) ; une troisième broche du coupleur photoélectrique (PC3) est mise à la terre ; une quatrième broche du coupleur photoélectrique (PC3) est connectée à un réseau (NTC) ; une première broche du coupleur photoélectrique (PC3) est connectée à la borne de sortie négative de fil de clip (OUT-) ; une deuxième broche du onzième résistor (R11) est connectée à la première broche du quatrième résistor (R4) du module de relais (33) ; une première broche du onzième résistor (R11) est mise à la terre ; une première broche de la quatrième triode (U4) est connectée à une deuxième broche du quarante-cinquième résistor (R45), une deuxième broche de la quatrième triode (U4) est connectée à la fois à une première broche du quarante-cinquième résistor (R45) et à une deuxième broche d'un troisième résistor NTC (NTC110K), et une troisième broche de la quatrième triode (U4) est connectée au réseau (NTC) ; le septième condensateur (C7) est connecté en parallèle à deux extrémités du quarante-cinquième résistor (R45) ; et une première broche du troisième résistor (NTC110K) est connectée à la première broche de la troisième puce (U3) du module d'alimentation stabilisée en tension (36) ;
le deuxième module de temporisation (42) comprend un cinquième condensateur (C15), un vingt-deuxième résistor (R22), un vingt-troisième résistor (R23), une trente-deuxième triode (Q32), un quarante-unième résistor (R41), un réseau (V1), une dixième diode (D10), un premier condensateur de filtrage (CE1), un trente-septième résistor (R37) et une sixième triode (Q6) ; une troisième broche de la trente-deuxième triode (Q32) est simultanément connectée à une première broche du quarante-et-unième résistor (R41) et à une deuxième broche du vingt-deuxième résistor (R22) ; une deuxième broche du quarante-unième résistor (R41) est connectée au réseau (V1) ; une première broche du vingt-deuxième résistor (R22) est simultanément connectée à une première broche du vingt-troisième résistor (R23) et à une extrémité du cinquième condensateur (C15) ; l'autre extrémité du cinquième condensateur (C15) est mise à la terre ; une première broche de la trente-deuxième triode (Q32) est connectée à une deuxième broche du vingt-troisième résistor (R23) ; une deuxième broche de la trente-deuxième triode (Q32) est connectée à une extrémité de la dixième diode (D10) ; l'autre extrémité de la dixième diode (D10) est simultanément connectée à une première broche du premier condensateur de filtrage (CE1) et à une première broche du trente-septième résistor (R37) ; une deuxième broche du premier condensateur de filtrage (CE1) est mise à la terre ; une deuxième broche du trente-septième résistor (R37) est connectée à une première broche de la sixième triode (Q6) ; une troisième broche de la sixième triode (Q6) est mise à la terre ; une deuxième broche de la sixième triode (Q6) est connectée à la première broche de la troisième triode (Q3) du module de contrôle de temporisation (34) ;
le module d'alarme d'erreur (391) comprend un dix-septième résistor (R17), une dixième triode (Q10), une deuxième diode (D2), un cinquième résistor (R5) et un buzzer (B22) ; une première broche du dix-septième résistor (R17) est connectée à la première broche du quatrième résistor (R4) du module de relais (33) ; une deuxième broche du dix-septième résistor (R17) est connectée à une première broche de la dixième triode (Q10) ; une troisième broche de la dixième triode (Q10) est mise à la terre ; une deuxième broche de la dixième triode (Q10) est connectée à une deuxième broche du buzzer (B22) ; deux extrémités de la deuxième diode (D2) sont respectivement connectées à une première broche et à la deuxième broche du buzzer (B22) ; une deuxième broche du cinquième résistor (R5) est connectée à la première broche du buzzer (B22) ; une première broche du cinquième résistor (R5) est connectée à un réseau (VDD) ;
le module d'affichage lumineux (43) comprend un quarante-deuxième résistor (R42), une treizième triode (Q13), un vingt-cinquième condensateur (C25), une quatorzième triode (Q14), un quarante-troisième résistor (R43), un sixième résistor (R6), une onzième triode (Q11), un douzième résistor (R12), une première lampe (LED3), un dix-huitième condensateur (C18), un vingt-septième résistor (R27), une douzième triode (Q12), un premier résistor (R1), un vingt-troisième condensateur (C23) et une deuxième lampe (LED1) ; une première broche du quarante-deuxième résistor (R42) est connectée à une première broche du quatrième résistor (R4) ; une deuxième broche du quarante-deuxième résistor (R42) est connectée à une première broche de la treizième triode (Q13) ; une troisième broche de la treizième triode (Q13) est mise à la terre ; une deuxième broche de la treizième triode (Q13) est simultanément connectée à une première broche de la douzième triode (Q12), à une deuxième broche du vingt-septième résistor (R27) et à une extrémité du dix-huitième condensateur (C18) ; une troisième broche de la douzième triode (Q12) est connectée à une troisième broche de la onzième triode (Q11) et mise à la terre ; une deuxième broche de la douzième triode (Q12) est simultanément connectée à une deuxième broche du premier résistor (R1) et à une extrémité du vingt-troisième condensateur (C23) ; l'autre extrémité du vingt-troisième condensateur (C23) est simultanément connectée à une deuxième broche de la quatorzième triode (Q14), à une première broche de la onzième triode (Q11) et à une deuxième broche du sixième résistor (R6) ; une deuxième broche de la onzième triode (Q11) est simultanément connectée à l'autre extrémité du dix-huitième condensateur (C18) et à une première broche du douzième résistor (R12) ; une deuxième broche du douzième résistor (R12) est connectée à une extrémité de la première lampe (LED3) ; une première broche du premier résistor (R1) est connectée à une extrémité de la deuxième lampe (LED1) ; une première broche du sixième résistor (R6) est connectée à une alimentation (VDD) et est connectée à l'autre extrémité de la première lampe (LED3), à une première broche du vingt-septième résistor (R27) et à l'autre extrémité de la deuxième lampe (LED1) ; une troisième broche de la quatorzième triode (Q14) est mise à la terre et est connectée à une extrémité du vingt-cinquième condensateur (C25) ; l'autre extrémité du vingt-cinquième condensateur (C25) est simultanément connectée à une première broche de la quatorzième triode (Q14) et à une deuxième broche du quarante-troisième résistor (R43) ; et une première broche du quarante-troisième résistor (R43) est connectée à un réseau (PM) ;
le circuit de contrôle de sécurité comprend en outre un module de détection de charge d'accès (44), dans lequel une extrémité de détection du module de détection de charge d'accès (44) sert à acquérir un signal de tension d'une borne de charge ; une extrémité de sortie de signal du module de détection de charge d'accès (44) est couplée à une extrémité d'entrée de signal du premier module de temporisation (41).

2. Circuit de contrôle de sécurité selon la revendication 1, dans lequel,
le module de détection de charge d'accès (44) comprend un comparateur (U1-D), une vingt-deuxième diode (D22), une vingt-cinquième diode (D25), un cinquante-et-unième résistor (R51), un cinquante-deuxième résistor (R52), un cinquante-troisième résistor (R53), un cinquante-quatrième résistor (R54), un cinquante-cinquième résistor (R55), un vingtième condensateur (C20), un douzième condensateur (C12) et un régulateur de tension (ZD2) ; une deuxième broche (13) du comparateur (U1-D) est connectée à une anode de la vingt-cinquième diode (D25), à une deuxième broche du cinquante-deuxième résistor (R52), à une deuxième broche du cinquante-cinquième résistor (R55) et à une extrémité du vingtième condensateur (C20) ;
une cathode de la vingt-cinquième diode (D25) est connectée à la borne de charge ; une première broche du cinquante-deuxième résistor (R52) est connectée au réseau (VDD), et l'autre extrémité du vingtième condensateur (C20) ainsi qu'une première broche du cinquante-cinquième résistor (R55) sont mises à la terre ;
une première broche (12) du comparateur (U1-D) est connectée à une première broche du cinquante-et-unième résistor (R51), à une deuxième broche du cinquante-troisième résistor (R53), à une première broche du cinquante-quatrième résistor (R54), à une première broche du régulateur de tension (ZD2) et à une extrémité du douzième condensateur (C12) ;
une deuxième broche du cinquante-et-unième résistor (R51) est connectée à une cathode de la vingt-deuxième diode (D22), et une anode de la vingt-deuxième diode (D22) est connectée à la borne de charge ;
une deuxième broche du cinquante-quatrième résistor (R54) est connectée à une borne d'alimentation de 2,5 V ;
une première broche du cinquante-troisième résistor (R53), l'autre extrémité du douzième condensateur (C12), et une deuxième broche du régulateur de tension (ZD2) sont mises à la terre ; et
une troisième broche (14) du comparateur (U1-D) est connectée à une anode d'une vingt-quatrième diode (D24), et une cathode de la vingt-quatrième diode (D24) est connectée à la deuxième broche du résistor (R2) du premier module de temporisation (41).

3. Circuit de contrôle de sécurité selon la revendication 1,
comprenant en outre un module de détection de court-circuit (45), dans lequel une extrémité de détection du module de détection de court-circuit (45) sert à acquérir un signal de courant lors de l'opération de charge ; et une extrémité de sortie de signal du module de détection de court-circuit (45) est couplée à une extrémité d'entrée de signal du premier module de temporisation (41).

4. Circuit de contrôle de sécurité selon la revendication 3, dans lequel,
le module de détection de court-circuit (45) comprend un comparateur (U1-C), une vingt-septième diode (D27), une vingt-huitième diode (D28), une vingt-neuvième diode (D29), un quarante-sixième résistor (R46), un quarante-septième résistor (R47), un quarante-huitième résistor (R48), un quarante-neuvième résistor (R49), un cinquante-sixième résistor (R56), un cinquante-septième résistor (R57), un cinquante-huitième résistor (R58), un cinquante-neuvième résistor (R59), un sixième transistor (Q16), un vingt-sixième condensateur (C26), un vingt-septième condensateur (C27), un vingt-huitième condensateur (C28), une puce (U4), et une vingt-sixième diode (D26) ; une première broche (10) du comparateur (U1-C) est connectée à une anode de la vingt-septième diode (D27), à une deuxième broche du quarante-septième résistor (R47), à une deuxième broche du quarante-huitième résistor (R48), et à une extrémité du vingt-huitième condensateur (C28) ; une cathode de la vingt-septième diode (D27) et une cathode de la vingt-huitième diode (D28) sont connectées à la borne de charge ;
une première broche du quarante-septième résistor (R47) et une deuxième broche du quarante-neuvième résistor (R49) sont connectées au réseau VDD ; une première broche du quarante-huitième résistor (R48) et l'autre extrémité du vingt-huitième condensateur (C28) sont mises à la terre ;
une deuxième broche (9) du comparateur (U1-C) est connectée à une première broche du cinquante-septième résistor (R57), à une première broche du cinquante-huitième résistor (R58), et à une extrémité du vingt-septième condensateur (C27) ; l'autre extrémité du vingt-septième condensateur (C27) est mise à la terre ; une deuxième broche du cinquante-septième résistor (R57) et une anode de la vingt-huitième diode (D28) sont mises à la terre ; une deuxième broche du cinquante-huitième résistor (R58) est connectée à la borne d'alimentation de 2,5 V ;
une troisième broche (8) du comparateur (U1-C) est connectée à une première broche du quarante-neuvième résistor (R49), à une deuxième broche du cinquante-neuvième résistor (R59), et à une cathode de la vingt-neuvième diode (D29) ; une anode de la vingt-neuvième diode (D29) est connectée à une borne de signal BTV ;
une première broche du quarante-sixième résistor (R46) et une première broche du cinquante-neuvième résistor (R59) sont connectées à une première broche du seizième transistor (Q16) ; une troisième broche du seizième transistor (Q16) et une deuxième broche du quarante-sixième résistor (R46) sont connectées à un réseau (VDD) ; une deuxième broche du seizième transistor (Q16) est connectée à la sixième broche (6) de la quatrième puce (U4) et à une première broche du cinquante-sixième résistor (R56) ; une deuxième broche du cinquante-sixième résistor (R56) est connectée à une broche 2 d'un commutateur à bouton K1 ; une broche 1 du commutateur à bouton K1 est mise à la terre ;
une cinquième broche (5) de la quatrième puce (U4) et une extrémité du vingt-sixième condensateur (C26) sont connectées au réseau VDD ; une deuxième broche de la quatrième puce (U4) et l'autre extrémité du vingt-sixième condensateur (C26) sont mises à la terre ; et
une première broche de la quatrième puce (U4) est connectée à la deuxième broche du deuxième résistor (R2) via la vingt-sixième diode (D26) ; et une troisième broche et une quatrième broche de la quatrième puce (U4) sont en suspension.

5. Pince de démarrage d'urgence pour automobile, comprenant une pince de câble d'anode (1) équipée d'une borne d'entrée (OUT+) ; une pince de câble de cathode (2) équipée d'une borne de sortie (OUT-) ; et un boîtier de contrôle (30), dans laquelle le boîtier de contrôle (30) comprend une coque supérieure de boîtier de contrôle (301), une coque inférieure de boîtier de contrôle (302), un bouton marche/arrêt (303) et le circuit de contrôle de sécurité selon l'une quelconque des revendications 1 à 4.

6. Pince de démarrage d'urgence pour automobile selon la revendication 5, dans laquelle la coque supérieure de boîtier de contrôle (301) et la coque inférieure de boîtier de contrôle (302) sont situées respectivement au-dessus et en dessous et sont connectées de manière fixée l'une à l'autre ; le circuit de contrôle de sécurité est disposé entre la coque supérieure de boîtier de contrôle (301) et la coque inférieure de boîtier de contrôle (302) ; et le bouton marche/arrêt (303) est disposé sur un côté de la coque supérieure de boîtier de contrôle (301) et est en connexion par contact avec le commutateur à bouton (K1) du circuit de contrôle de sécurité.
